# EUROPEAN PATENT APPLICATION

(11) **EP 4 561 202 A1**
(43) Date of publication of application: **28.05.2025**
(21) Application number: 22951561.4
(22) Date of filing: 21.07.2022
(51) Int. Cl.: H04W 64/00, H04W 56/00

(54) **TIME INFORMATION INTERACTION METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/107203
(87) International publication number: WO 2024/016289

(57) **Abstract**

The present disclosure belongs to the technical field of communications. Provided are a time information interaction method and apparatus, and a device and a storage medium. The method comprises: receiving time information sent by a second terminal device, wherein the time information is used for calibrating SL PRS time information. The present disclosure provides a processing method for a "time information interaction" situation, so as to calibrate SL PRS time information, such that the accuracy of determining a time difference between multiple SL PRSs can be improved, and the accuracy of determining positioning information is improved.

## Description

### TECHNICAL FIELD

The disclosure relates to the field of communication technology, in particular to a method and an apparatus for timing information interaction, a device, and a storage medium.

### BACKGROUND

In a mobile communication system, methods of determining the positioning of a sidelink (SL) between user equipments (UEs) includes absolute positioning, relative positioning, and ranging. The ranging usually involves only two UEs, i.e., the ranging is performed between two UEs. However, the absolute positioning and the relative positioning may involve in a plurality of assistance UEs for positioning, in order to improve the accuracy of the absolute positioning and the relative positioning. When clocks of a plurality of positioning reference UEs are not synchronized, an accuracy of determining a timing difference between a plurality of SL positioning reference signals (PRSs) may be reduced, resulting in a lower accuracy of determining position information.

### SUMMARY

The disclosure provides a method and an apparatus for timing information interaction, a device, and a storage medium, which calibrates timing information of a sidelink (SL) positioning reference signal (PRS), which may improve an accuracy of determining a timing difference between a plurality of SL PRSs, and improve an accuracy of determining positioning information.

An aspect of embodiments of the disclosure provides a method for timing information interaction. The method is performed by a first user equipment (UE). The method includes: receiving timing information sent by a second UE, in which the timing information is configured to calibrate timing information of an SL PRS.

Optionally, in an embodiment of the disclosure, the timing information includes at least one of: an absolute timing for SL PRS sending; a relative timing for SL PRS sending; a timing offset of an SL link of the first UE; an absolute timing for SL PRS receiving; a relative timing for SL PRS receiving; a clock offset of the first UE; or a timing offset for timing of a downlink (DL) radio frame of a serving cell of the first UE.

Optionally, in an embodiment of the disclosure, the absolute timing includes at least one of: a universal time coordinated (UTC) timing; or a global navigation satellite system (GNSS) timing.

Optionally, in an embodiment of the disclosure, a timing offset of an SL link includes a timing offset of an SL link radio frame of the first UE relative to a reference timing, and the timing offset relative to the reference timing includes at least one of: a timing relative to the DL radio frame of the serving cell of the first UE; a timing relative to a radio frame of an SL link of a reference UE; a timing relative to a DL radio frame of a network device for the serving cell of the first UE; or a timing relative to a DL radio frame of a UE or a network device of a reference cell.

Optionally, in an embodiment of the disclosure, the clock offset of the first UE is an offset value of an internal clock in the first UE relative to a standard clock.

Optionally, in an embodiment of the disclosure, the method further includes: receiving a sending timing of the SL PRS sent by at least one positioning reference UE, in which the sending timing includes an absolute sending timing or a relative sending timing; determining, based on a receiving timing of the SL PRS and the sending timing, at least one one-way propagation delay; and determining, based on a difference and a timing offset between the at least one one-way propagation delay, a value of timing difference of arrival (TDOA), in which the timing offset includes the timing offset of the SL link of the first UE and/or the clock offset of the first UE

Optionally, in an embodiment of the disclosure, the method further includes: receiving the timing information sent by the second UE via at least one of following messages: a sidelink control information (SCI) message; a medium access control (MAC) control element (CE) message; a radio resource control (RRC) message; or a non-access stratum (NAS) message.

Optionally, in an embodiment of the disclosure, the NAS message includes at least one of: a long term evolution positioning protocol (LPP) message of general mobile communication technology; an SL LPP message of SL mobile communication technology; or a PC5-S message.

Optionally, in an embodiment of the disclosure, the method further includes: receiving timing synchronization source information sent by the second UE.

Optionally, in an embodiment of the disclosure, a timing synchronization source corresponding to the timing synchronization source information includes at least one of: a GNSS; a UE directly synchronized to a GNSS clock; the UE, a next generation node base (gNB) or an evolved node base (eNB) directly synchronized to the GNSS clock; a UE directly synchronized to a gNB clock or an eNB clock; a UE indirectly synchronized to the gNB clock or the eNB clock; or a UE with a lowest priority.

Another aspect of embodiments of the disclosure provides a method for timing information interaction. The method is performed by a first UE. The method includes: receiving timing information sent by a base station, in which the timing information is configured to calibrate timing information of an SL PRS.

Optionally, in an embodiment of the disclosure, the method further includes: receiving timing synchronization source information sent by the base station.

Optionally, in an embodiment of the disclosure, a timing synchronization source corresponding to the timing synchronization source information includes at least one of: a GNSS clock; a reference UE clock; or a base station clock.

Another aspect of embodiments of the disclosure provides a method for timing information interaction. The method is performed by a second UE. The method includes: sending timing information to a first UE, in which the timing information is configured to calibrate timing information of an SL PRS.

Optionally, in an embodiment of the disclosure, the method further includes: receiving the timing information sent by a base station.

Optionally, in an embodiment of the disclosure, sending the timing information to the first UE includes: determining, based on an absolute timing for sending or receiving of at least one SL PRS sent by the base station or at least one positioning assistance UE, an absolute timing for sending or receiving of a first SL PRS as a reference timing, in which the absolute timing for sending or receiving of the first SL PRS is an absolute timing for sending or receiving of any SL PRS in the absolute timing for sending or receiving of the at least one SL PRS; calculating a relative timing of an absolute timing for sending or receiving of a second SL PRS to the absolute timing for sending or receiving of the first SL PRS, in which the absolute timing for sending or receiving of the second SL PRS is an absolute timing for sending or receiving of any SL PRS other than the absolute timing for sending or receiving of the first SL PRS in the absolute timing for sending or receiving of the at least one SL PRS; and sending the relative timing to the first UE.

Optionally, in an embodiment of the disclosure, the timing information includes at least one of: a timing offset of an SL link of at least one positioning assistance UE; a timing offset of a DL radio frame of a serving cell of the first UE; or a clock offset of the first UE.

Optionally, in an embodiment of the disclosure, sending the timing information to the first UE includes: sending timing synchronization source information to the first UE.

Optionally, in an embodiment of the disclosure, a timing synchronization source corresponding to the timing synchronization source information includes at least one of: a GNSS; a UE directly synchronized to a GNSS clock; the UE, a gNB or an eNB directly synchronized to the GNSS clock; a UE directly synchronized to a gNB clock or an eNB clock; a UE indirectly synchronized to the gNB clock or the eNB clock; or a UE with a lowest priority.

Another aspect of embodiments of the disclosure provides a method for timing information interaction. The method is performed by a base station. The method includes: sending timing information to a first UE, in which the timing information is configured to calibrate timing information of an SL PRS.

Optionally, in an embodiment of the disclosure, the method further includes: receiving the timing information sent by at least one positioning assistance UE.

Optionally, in an embodiment of the disclosure, the method further includes: determining, based on an absolute timing for sending or receiving of at least one SL PRS sent by the at least one positioning assistance UE, an absolute timing for sending or receiving of a first SL PRS as a reference timing, in which the absolute timing for sending or receiving of the first SL PRS is an absolute timing for sending or receiving of any SL PRS in the absolute timing for sending or receiving of the at least one SL PRS; calculating a relative timing of an absolute timing for sending or receiving of a second SL PRS to the absolute timing for sending or receiving of the first SL PRS, in which the absolute timing for sending or receiving of the second SL PRS is an absolute timing for sending or receiving of any SL PRS other than the absolute timing for sending or receiving of the first SL PRS in the absolute timing for sending or receiving of the at least one SL PRS; and sending the relative timing to the first UE.

Optionally, in an embodiment of the disclosure, the method further includes: sending the absolute timing for sending or receiving of the at least one SL PRS to the second UE.

Optionally, in an embodiment of the disclosure, before sending the timing information to the first UE, the method further includes at least one of: obtaining a timing offset of an SL link of the at least one positioning assistance UE sent by the at least one positioning assistance UE; obtaining a timing offset of a DL radio frame of a serving cell of the first UE; or obtaining a clock offset of the first UE.

Optionally, in an embodiment of the disclosure, the method further includes: sending at least one of the following timing offsets to a second UE: the timing offset of the SL link of the at least one positioning assistance UE; the timing offset of the DL radio frame of the serving cell of the first UE; or the clock offset of the first UE.

Optionally, in an embodiment of the disclosure, the method further includes: sending timing synchronization source information to the first UE.

Optionally, in an embodiment of the disclosure, a timing synchronization source corresponding to the timing synchronization source information includes at least one of: clock information of a GNSS; clock information of a reference UE; or clock information of the base station.

Optionally, in an embodiment of the disclosure, the method further includes: receiving the timing information sent by a network device.

Another aspect of embodiments of the disclosure provides an apparatus for timing information interaction. The apparatus is configured in a first UE. The apparatus includes: a receiving module, configured to receive timing information sent by a second UE, in which the timing information is configured to calibrate timing information of an SL PRS.

Another aspect of embodiments of the disclosure provides an apparatus for timing information interaction. The apparatus is configured in a first UE. The apparatus includes: a receiving module, configured to receive timing information sent by a base station, in which the timing information is configured to calibrate timing information of an SL PRS.

Another aspect of embodiments of the disclosure provides an apparatus for timing information interaction. The apparatus is configured in a second UE. The apparatus includes: a sending module, configured to send timing information to a first UE, in which the timing information is configured to calibrate timing information of an SL PRS.

Another aspect of embodiments of the disclosure provides an apparatus for timing information interaction. The apparatus is configured in a base station. The apparatus includes: a sending module, configured to send timing information to a first UE, in which the timing information is configured to calibrate timing information of an SL PRS.

Another aspect of embodiments of the disclosure provides a first UE. The first UE includes a processor and a memory, in which the memory stores a computer program, and when the computer program is executed by the processor, cause the device to implement the methods according to the embodiments described above.

Another aspect of embodiments of the disclosure provides a first UE. The first UE includes a processor and a memory, in which the memory stores a computer program, and when the computer program is executed by the processor, cause the device to implement the methods according to the embodiments described above.

Another aspect of embodiments of the disclosure provides a second UE. The second UE includes a processor and a memory, in which the memory stores a computer program, and when the computer program is executed by the processor, cause the device to implement the methods according to the embodiments described above.

Another aspect of embodiments of the disclosure provides a base station. The base station includes a processor and a memory, in which the memory stores a computer program, and when the computer program is executed by the processor, cause the device to implement the methods according to the embodiments described above.

Another aspect of embodiments of the disclosure provides a communication device. The communication device includes a processor and an interface circuit; in which the interface circuit is configured to receive code instructions and transmit the code instructions to the processor; and the processor is configured to execute the code instructions to implement the methods according to the embodiments described above.

Another aspect of embodiments of the disclosure provides a communication device. The communication device includes a processor and an interface circuit; in which the interface circuit is configured to receive code instructions and transmit the code instructions to the processor; and the processor is configured to execute the code instructions to implement the methods according to the embodiments described above.

Another aspect of embodiments of the disclosure provides a communication device. The communication device includes a processor and an interface circuit; in which the interface circuit is configured to receive code instructions and transmit the code instructions to the processor; and the processor is configured to execute the code instructions to implement the methods according to the embodiments described above.

Another aspect of embodiments of the disclosure provides a communication device. The communication device includes a processor and an interface circuit; in which the interface circuit is configured to receive code instructions and transmit the code instructions to the processor; and the processor is configured to execute the code instructions to implement the methods according to the embodiments described above.

Another aspect of embodiments of the disclosure provides a computer-readable storage medium for storing instructions, in which when the instructions are executed, the methods according to the embodiments described above are implemented.

Another aspect of embodiments of the disclosure provides a computer-readable storage medium for storing instructions, in which when the instructions are executed, the methods according to the embodiments described above are implemented.

Another aspect of embodiments of the disclosure provides a computer-readable storage medium for storing instructions, in which when the instructions are executed, the methods according to the embodiments described above are implemented.

Another aspect of embodiments of the disclosure provides a computer-readable storage medium for storing instructions, in which when the instructions are executed, the methods according to the embodiments described above are implemented.

In summary, in embodiments of the disclosure, the timing information sent by the second UE device is received, in which the timing information is configured to calibrate the timing information of the SL PRS. In embodiments of the disclosure, the timing information between the plurality of SL PRSs may be calibrated, which may improve the accuracy of determining the timing difference between the plurality of SL PRSs, reduce the inaccuracy of determining the positioning information, and improving the accuracy of determining the positioning information. The disclosure provides a processing method for a "timing information interaction" scenario to calibrate timing information of the SL PRS, which may improve the accuracy of determining the timing difference between the plurality of SL PRSs, and improve the accuracy of determining the positioning information.

### BRIEF DESCRIPTION OF THE DRAWINGS

The above-mentioned and/or additional aspects and advantages of the disclosure will become apparent and readily appreciated from the following description of embodiments, in combination with the accompanying drawings.
FIG. 1 is a schematic diagram illustrating an example of a method for timing information interaction according to an embodiment of the disclosure.
FIG. 2 is a flowchart illustrating a method for timing information interaction according to an embodiment of the disclosure.
FIG. 3 is a schematic diagram illustrating an interaction of a method for timing information interaction according to another embodiment of the disclosure.
FIG. 4 is a flowchart illustrating a method for timing information interaction according to another embodiment of the disclosure.
FIG. 5 is a flowchart illustrating a method for timing information interaction according to another embodiment of the disclosure.
FIG. 6 is a flowchart illustrating a method for timing information interaction according to another embodiment of the disclosure.
FIG. 7 is a schematic diagram illustrating an interaction of a method for timing information interaction according to another embodiment of the disclosure.
FIG. 8 is a flowchart illustrating a method for timing information interaction according to another embodiment of the disclosure.
FIG. 9 is a schematic diagram illustrating an interaction of a method for timing information interaction according to another embodiment of the disclosure.
FIG. 10 is a flowchart illustrating a method for timing information interaction according to another embodiment of the disclosure.
FIG. 11 is a flowchart illustrating a method for timing information interaction according to another embodiment of the disclosure.
FIG. 12 is a schematic diagram illustrating an interaction of a method for timing information interaction according to another embodiment of the disclosure.
FIG. 13 is a schematic diagram illustrating an interaction of a method for timing information interaction according to another embodiment of the disclosure.
FIG. 14 is a flowchart illustrating a method for timing information interaction according to another embodiment of the disclosure.
FIG. 15 is a flowchart illustrating a method for timing information interaction according to another embodiment of the disclosure.
FIG. 16 is a flowchart illustrating a method for timing information interaction according to another embodiment of the disclosure.
FIG. 17 is a flowchart illustrating a method for timing information interaction according to another embodiment of the disclosure.
FIG. 18 is a flowchart illustrating a method for timing information interaction according to another embodiment of the disclosure.
FIG. 19 is a schematic diagram illustrating an interaction of a method for timing information interaction according to another embodiment of the disclosure.
FIG. 20 is a flowchart illustrating a method for timing information interaction according to another embodiment of the disclosure.
FIG. 21 is a schematic diagram illustrating an interaction of a method for timing information interaction according to another embodiment of the disclosure.
FIG. 22 is a flowchart illustrating a method for timing information interaction according to another embodiment of the disclosure.
FIG. 23 is a flowchart illustrating a method for timing information interaction according to another embodiment of the disclosure.
FIG. 24 is a schematic diagram illustrating an interaction of a method for timing information interaction according to another embodiment of the disclosure.
FIG. 25 is a structural block diagram illustrating an apparatus for timing information interaction according to an embodiment of the disclosure.
FIG. 26 is a structural block diagram illustrating an apparatus for timing information interaction according to another embodiment of the disclosure.
FIG. 27 is a structural block diagram illustrating an apparatus for timing information interaction according to an embodiment of the disclosure.
FIG. 28 is a structural block diagram illustrating an apparatus for timing information interaction according to another embodiment of the disclosure.
FIG. 29 is a block diagram illustrating a user equipment (UE) according to an embodiment of the disclosure.
FIG. 30 is a block diagram illustrating a base station according to an embodiment of the disclosure.

### DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the disclosure. Rather, they are merely examples of devices and methods consistent with aspects of the embodiments of the disclosure as recited in the appended claims.

Terms used in the embodiments of the disclosure are for the purpose of describing specific embodiments only, and are not intended to limit the embodiments of the disclosure. As used in the examples of this disclosure and the appended claims, the singular forms "a/an", "said" and "the" are also intended to include the plural forms unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" and "in case" as used herein may be interpreted as "in a case that" or "when" or "in response to a determination".

Network elements or network functions involved in embodiments of the disclosure may be implemented by a separate hardware device or by software in the hardware device. This is not limited in the embodiments of the disclosure.

Positioning based on a sidelink (SL) between user equipments (UEs) includes absolute positioning, relative positioning, and ranging. The absolute positioning refers to determining an absolute coordinate of the UE. The relative positioning refers to determining a coordinate of the UE relative to a reference point. The ranging refers to determining a distance and/or angle of the UE relative to a reference point. The ranging generally refers to ranging between only two UEs. The absolute positioning and the relative positioning may involve in a plurality of assistance UEs for positioning.

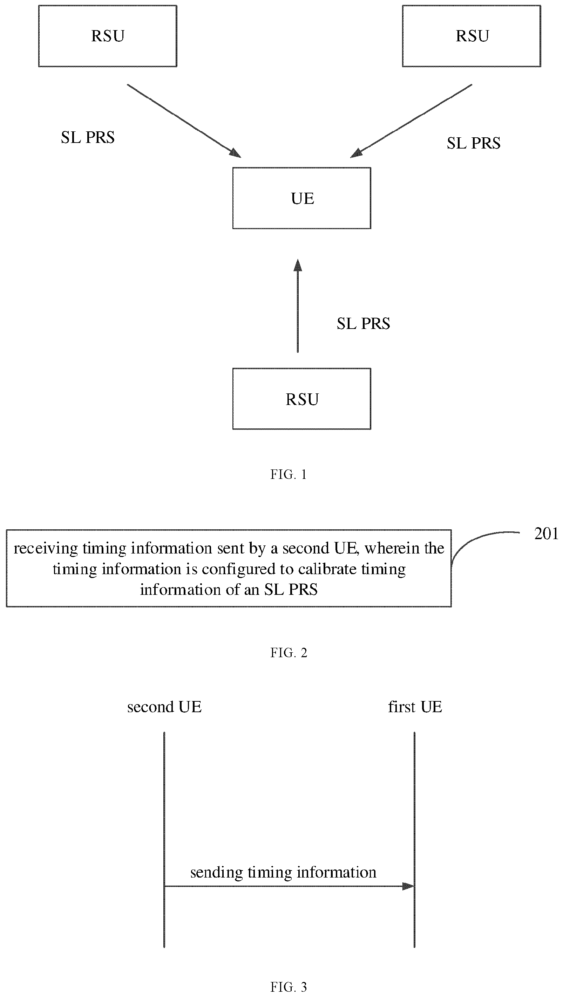

FIG. 1 is a schematic diagram illustrating an example of a method for timing information interaction according to an embodiment of the disclosure. As shown in FIG. 1, taking a positioning method based on downlink timing difference of arrival (DL-TDOA) as an example, a plurality of road side units (RSUs) may be disposed on road sides. For example, each RSU may correspond to fixed position information. The UE measures a positioning signal sent by the plurality of RSUs via an SL link. A specific position of the UE relative to the RSUs may be determined based on the positioning signal. For example, the number of the plurality of RSUs may be greater than or equal to three. For example, the positioning signal may include position information of the RSUs. For example, the UE may measure TDOAs of three positioning signals sent by the three RSUs. The UE may determine position information of the UE, or position information of the UE relative to a particular RSU based on the TDOAs of the three positioning signals and position information of each RSU.

The positioning solution includes, in addition to the DL-TDOA, uplink timing difference of arrival (UL-TDOA), multiple round trip time (RTT), angle-of-arrival (AOA), or angle-of-departure (AOD), carrier phase positioning, etc. If absolute position information, such as global positioning system (GPS) based on RSUs, is not converted into absolute position coordinates in a positioning result, the positioning result is relative positioning. Otherwise, the positioning result is absolute positioning. An RSU participating in the relative positioning or the absolute positioning is a positioning assistance UE.

In an embodiment of the disclosure, if only two UEs are used for the positioning, then each UE is a positioning assistance UE for the other UE.

In addition, in an embodiment of the disclosure, the positioning assistance UE has different types. For example, the positioning assistance UE may include an RSU type of positioning assistance UE. The RSU type of positioning assistance UE is an infrastructure that may provide positioning services by cooperating with other RSUs. For example, a common UE may also serve as a positioning assistance UE, which may be difficult to assist in providing positioning services by cooperating with other UEs. In addition, some positioning assistance UEs have position information, such as GPS, which may assist other UEs in performing the absolute positioning. Further, some other positioning assistance UEs may not have position information such as the GPS.

A method and an apparatus for timing information interaction, a device, and a storage medium provided in embodiments of the disclosure are described in detail in the following with reference to the accompanying drawings.

FIG. 2 is a flowchart illustrating a method for timing information interaction according to an embodiment of the disclosure. The method is performed by a first UE. As shown in FIG. 2, the method may include the following step 201.

At step 201, timing information sent by a second UE is received, in which the timing information is configured to calibrate timing information of a SL PRS.

It needs to be noted that in an embodiment of the disclosure, the UE may be a device that provides voice and/or data connectivity to a user. The UE may communicate with one or more core networks via a radio access network (RAN). The UE may be an internet of things (IoT) terminal, such as a sensor device, a cell phone (or a "cellular" phone), or a computer with an IoT terminal. For example, the UE may be a stationary, portable, pocket-sized, handheld, computer-integrated, or vehicle-mounted device. For example, the UE may be a station (STA), a subscriber unit, a subscriber station, a mobile station, a remote station, an access point, a remote terminal, an access terminal, a user terminal, or a user agent. Optionally, the UE may be a device of an unmanned aerial vehicle or a vehicle mounted device. For example, the UE may be a vehicle computer with a wireless communication function, or a wireless terminal with an external vehicle computer. Optionally, the UE may be a roadside device. For example, the UE may be a street light, a signal light, or other roadside equipment, etc., with a wireless communication function.

In an embodiment of the disclosure, FIG. 3 is a schematic diagram illustrating an interaction of a method for timing information interaction according to another embodiment of the disclosure. As shown in FIG. 3, the second UE may send the timing information to the first UE. The first UE may receive the timing information sent by the second UE, in which the timing information is configured to calibrate timing information of an SL PRS.

In an embodiment of the disclosure, the timing information of the SL PRS may be applied to at least one positioning method. The at least one positioning method includes, but is not limited to, SL TDOA positioning, Multi-RTT positioning, etc.

In an embodiment of the disclosure, for example, the first UE may be a positioned UE. The first UE may calibrate the timing information of the SL PRS based on the timing information sent by the second UE. The first UE may perform the SL TDOA positioning based on the calibrated timing information of the SL PRS to determine position information of the first UE.

In an embodiment of the disclosure, the second UE includes at least one of: a positioning assistance UE; a positioned UE; or a UE that sends an SL PRS configuration to the first UE.

In an embodiment of the disclosure, for example, the second UE may be a device that interacts the timing information with the first UE. For example, the second UE may be an infrastructure UE. The infrastructure UE is a type of UE that specializes in providing a positioning function, such as an RSU, or other UE that provides a positioning service. For example, the UE that may provide the positioning service may be a UE that has global navigation satellite system (GNSS) position information. The infrastructure UE may be categorized as a master infrastructure or a slave infrastructure. The second UE may be a master infrastructure or a slave infrastructure.

For example, in an embodiment of the disclosure, when TDOA positioning is used, if the first UE sends a PRS, a plurality of infrastructure UEs may receive the PRS and determine the position information of the first UE by measuring a receiving timing of the PRS.

For example, in an embodiment of the disclosure, when TDOA positioning is used, if the plurality of infrastructure UEs send PRSs, the first UE may receive the PRSs sent by the plurality of infrastructure UEs, determine receiving timings of a plurality of PRSs, and calculate a timing difference in the receiving timings between the plurality of PRSs based on the receiving timings.

In an embodiment of the disclosure, the timing information includes at least one of: an absolute timing for SL PRS sending; a relative timing for SL PRS sending; a timing offset of an SL link of the first UE; an absolute timing for SL PRS receiving; a relative timing for SL PRS receiving; a clock offset of the first UE; or a timing offset for timing of a DL radio frame of a serving cell of the first UE.

In an embodiment of the disclosure, the absolute timing includes at least one of: a universal time coordinated (UTC) timing; or a GNSS timing.

For example, in an embodiment of the disclosure, the first UE and the second UE may only interact with the absolute timing. For example, instead of interacting with the year, month, and day, only the hour, minute, second, microsecond, and nanosecond may be interacted between the first UE and the second UE.

For example, in an embodiment of the disclosure, the relative timing may be a timing relative to a reference UE. For example, a sending timing of the SL PRS of the first UE may be a relative timing relative to a sending timing of the SL PRS of the reference UE, and a receiving timing of the SL PRS of the first UE may be a relative timing relative to a receiving timing of the SL PRS of the reference UE.

For example, in an embodiment of the disclosure, a timing offset of an SL link includes a timing offset of an SL link radio frame of the first UE relative to a reference timing, and the timing offset relative to the reference timing includes at least one of: a timing relative to the DL radio frame of the serving cell of the first UE; a timing relative to a radio frame of an SL link of a reference UE; a timing relative to a DL radio frame of a network device for the serving cell of the first UE; or a timing relative to a DL radio frame of a UE or a network device of a reference cell.

For example, in an embodiment of the disclosure, the timing offset may be a timing offset of the SL link radio frame of the first UE. For example, a unit of the timing offset may be nanoseconds.

For example, in an embodiment of the disclosure, an up load (UL) carrier frequency of the serving cell or reference cell is the same as the SL link frequency.

In an embodiment of the disclosure, the clock offset of the first UE is an offset value of an internal clock in the first UE relative to a standard clock.

For example, in an embodiment of the disclosure, a unit of the clock offset of the first UE may be nanoseconds.

For example, in an embodiment of the disclosure, a synchronization source or a standard clock of the internal clock may be at least one of a GNSS clock, a clock of a base station, a clock of a reference UE.

For example, in an embodiment of the disclosure, the timing offset of the DL radio frame timing of the serving cell of the first UE may be a timing offset between the DL radio frame timing of the serving cell of the first UE and the DL radio frame timing of the reference cell. For example, the DL radio frame timing of the reference cell may be in the base station side or on the UE side. Optionally, a UL carrier frequency of the serving cell or the reference cell is the same as the SL link frequency.

For example, in an embodiment of the disclosure, the timing information may include timing information of one or more UEs, in which the one or more UEs may be UE(s) involved in sending or receiving a PRS for positioning. For example, the one or more UEs may include the first UE or the second UE. For another example, the one or more UEs may not include either the first UE or the second UE.

For example, in an embodiment of the disclosure, the method further includes: receiving a sending timing of the SL PRS sent by at least one positioning reference UE, in which the sending timing includes an absolute sending timing or a relative sending timing; determining, based on a receiving timing of the SL PRS and the sending timing, at least one one-way propagation delay; and determining, based on a difference and a timing offset between the at least one one-way propagation delay, a value of TDOA, in which the timing offset includes the timing offset of the SL link of the first UE and/or the clock offset of the first UE.

In an embodiment of the disclosure, the method further includes: receiving the timing information sent by the second UE via at least one of following messages: a sidelink control information (SCI) message; a medium access control (MAC) control element (CE) message; a radio resource control (RRC) message; or a non-access stratum (NAS) message.

In an embodiment of the disclosure, when the first UE receives the timing information sent by the second UE, the first UE may receive the timing information sent by the second UE via the SCI message, for example. When the first UE receives the timing information sent by the second UE, the first UE may receive the timing information sent by the second UE via the MAC CE message, for example. When the first UE receives the timing information sent by the second UE, the first UE may receive the timing information sent by the second UE via the RRC message, for example.

For example, in an embodiment of the disclosure, the NAS message includes at least one of: a long term evolution positioning protocol (LPP) message; an SL LPP message; or a PC5-S message.

In an embodiment of the disclosure, when the first UE receives the timing information sent by the second UE, the first UE may receive the timing information sent by the second UE via the NAS message, for example. The NAS message does not specifically refer to a fixed message. For example, the NAS message may be the LPP message or the SL LPP message.

Optionally, in an embodiment of the disclosure, the method further includes: receiving timing synchronization source information sent by the second UE.

Optionally, in an embodiment of the disclosure, a timing synchronization source corresponding to the timing synchronization source information includes at least one of: a GNSS; a UE directly synchronized to a GNSS clock; the UE, a next generation node base (gNB) or an evolved node base (eNB) directly synchronized to the GNSS clock; a UE directly synchronized to a gNB clock or an eNB clock; a UE indirectly synchronized to the gNB clock or the eNB clock; or a UE with a lowest priority.

For example, in an embodiment of the disclosure, in the case that the timing synchronization source is a UE, the timing synchronization source information includes a UE identifier (ID), for example, a sidelink synchronization signal ID (SLSSID), a sidelink layer2 (SL L2) destination ID, etc. In the case that the timing synchronization source is a base station, the timing synchronization source information includes a physical cell identifier (PCI) or a global cell identifier (GCI) of the base station.

In summary, in embodiments of the disclosure, the timing information sent by the second UE device is received, in which the timing information is configured to calibrate the timing information of the SL PRS. In embodiments of the disclosure, the timing information between the plurality of SL PRSs may be calibrated, which may improve the accuracy of determining the timing difference between the plurality of SL PRSs, reduce the inaccuracy of determining the positioning information, and improve the accuracy of determining the positioning information. The disclosure provides a processing method for a "timing information interaction" scenario to calibrate timing information of the SL PRS, which may improve the accuracy of determining the timing difference between the plurality of SL PRSs, and improve the accuracy of determining the positioning information.

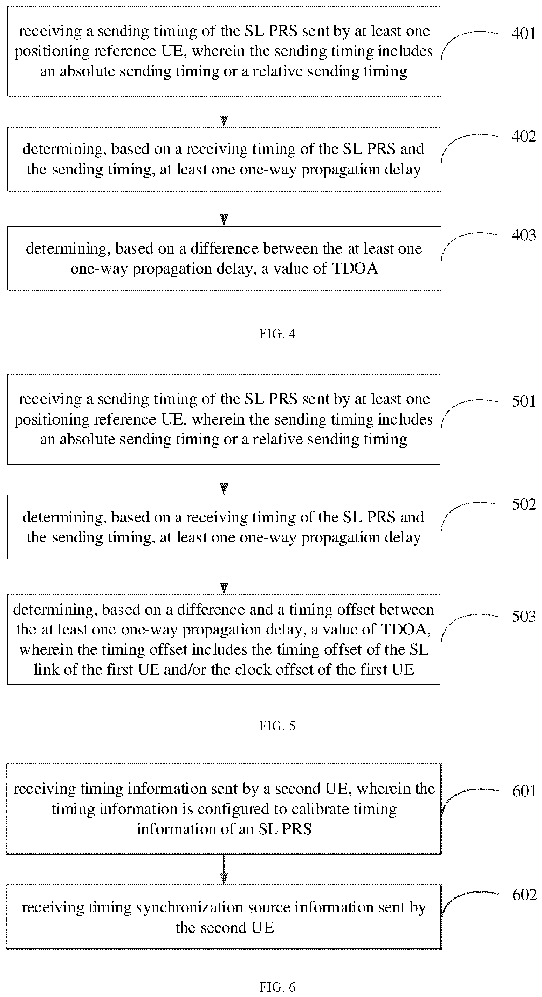

FIG. 4 is a flowchart illustrating a method for timing information interaction according to an embodiment of the disclosure. The method is performed by a first UE. As shown in FIG. 4, the method may include the following steps 401 to 403.

At step 401, a sending timing of an SL PRS sent by at least one positioning reference UE is received, in which the sending timing includes an absolute sending timing or a relative sending timing.

At step 402, at least one one-way propagation delay is determined based on a receiving timing of the SL PRS and the sending timing.

At step 403, a value of TDOA is determined based on a difference between the at least one one-way propagation delay.

In an embodiment of the disclosure, the timing information includes a sending timing of the SL PRS. The sending timing of the SL PRS includes an absolute sending timing or a relative sending timing of the SL PRS.

In an embodiment of the disclosure, the first UE may receive the sending timing of the SL PRS sent by the at least one positioning reference UE. The first UE may determine, based on the receiving timing of the SL PRS and the sending timing, the at least one one-way propagation delay. For example, the at least one one-way propagation delay may be a one-way propagation delay corresponding to at least one SL PRS, i.e., one SL PRS corresponds to one one-way propagation delay. The first UE may determine the value of TDOA by calculating a difference between the at least one one-way propagation delay.

In an embodiment of the disclosure, for example, when the first UE sends the SL PRS to a plurality of positioning reference UEs, the plurality of positioning reference UEs may obtain the value of the TDOA based on a difference between absolute receiving timings or relative receiving timings of the received respective SL PRSs.

In summary, in embodiments of the disclosure, the sending timing of the SL PRS sent by the at least one positioning reference UE is received, in which the sending timing includes the absolute sending timing or the relative sending timing; the at least one one-way propagation delay is determined based on the receiving timing of the SL PRS and the sending timing; and the value of TDOA is determined based on the difference between the at least one one-way propagation delay. In embodiments of the disclosure, the timing difference between the plurality of SL PRSs may be determined, and the position information of the first UE may be determined using SL TDOA positioning.

FIG. 5 is a flowchart illustrating a method for timing information interaction according to an embodiment of the disclosure. The method is performed by a first UE. As shown in FIG. 5, the method may include the following steps 501 to 503.

At step 501, a sending timing of an SL PRS sent by at least one positioning reference UE is received, in which the sending timing includes an absolute sending timing or a relative sending timing.

At step 502, at least one one-way propagation delay is determined based on a receiving timing of the SL PRS and the sending timing.

At step 503, a value of TDOA is determined based on a difference and a timing offset between the at least one one-way propagation delay, in which the timing offset includes the timing offset of the SL link and/or the clock offset of the first UE.

In an embodiment of the disclosure, the first UE may receive the sending timing of the SL PRS sent by the at least one positioning reference UE. The first UE may determine, based on the receiving timing of the SL PRS and the sending timing, the at least one one-way propagation delay. For example, the at least one one-way propagation delay may be a one-way propagation delay corresponding to at least one SL PRS, i.e., one SL PRS corresponds to one one-way propagation delay. For example, if a clock offset or a timing offset of the SL link is not calibrated by using the sending timing, the first UE device may determine, based on the difference and the timing offset between the at least one one-way propagation delay, the value of TDOA, in which the timing offset includes the timing offset of the SL link and/or the clock offset of the first UE. The first UE determines, based on the difference and the timing offset between the at least one one-way propagation delay, the value of TDOA. For example, the first UE may determine the value of TDOA after calibrating the at least one one-way propagation delay using the timing offset.

In summary, in embodiments of the disclosure, the sending timing of the SL PRS sent by the at least one positioning reference UE is received, in which the sending timing includes the absolute sending timing or the relative sending timing; the at least one one-way propagation delay is determined based on the receiving timing of the SL PRS and the sending timing; and the value of TDOA is determined based on the difference and the timing offset between the at least one one-way propagation delay, in which the timing offset includes the timing offset of the SL link and/or the clock offset of the first UE. In embodiments of the disclosure, the difference between the at least one one-way propagation delay may be calibrated, which may improve the accuracy of determining the timing difference between the plurality of SL PRSs, reduce the inaccuracy of determining the positioning information, and improve the accuracy of determining the positioning information. The disclosure provides a processing method for a "timing information interaction" scenario to calibrate timing information of the SL PRS, which may improve the accuracy of determining the timing difference between the plurality of SL PRSs and improve the accuracy of determining positioning information.

FIG. 6 is a flowchart illustrating a method for timing information interaction according to an embodiment of the disclosure. The method is performed by a first UE. As shown in FIG. 6, the method may include the following steps 601 to 602.

At step 601, timing information sent by a second UE is received, in which the timing information is configured to calibrate timing information of an SL PRS.

At step 602, timing synchronization source information sent by the second UE is received.

In an embodiment of the disclosure, step 601 and step 602 may be performed simultaneously. That is, the first UE may receive the timing synchronization source information sent by the second UE while receiving the timing information sent by the second UE (i.e., receiving the timing information and the timing synchronization source information sent by the second UE simultaneously).

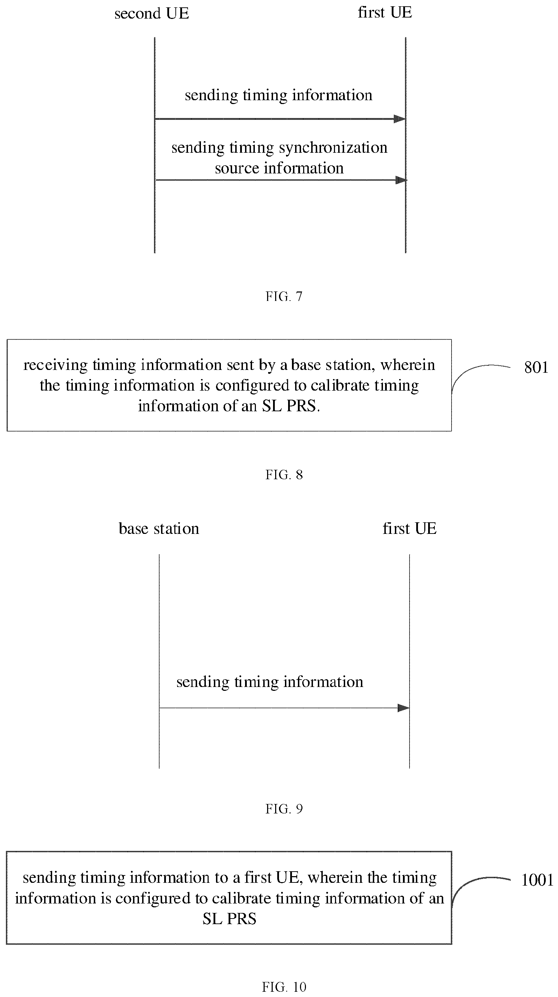

In an embodiment of the disclosure, FIG. 7 is a schematic diagram illustrating an interaction of a method for timing information interaction according to an embodiment of the disclosure. As shown in FIG. 7, the second UE may send the timing information and send the timing synchronization source information to the first UE simultaneously. The first UE may receive the timing information and the timing synchronization source information sent by the second UE, in which the timing information is configured to calibrate the timing information of the SL PRS.

Optionally, in an embodiment of the disclosure, a timing synchronization source corresponding to the timing synchronization source information includes at least one of: a GNSS; a UE directly synchronized to a GNSS clock; the UE, a gNB or an eNB directly synchronized to the GNSS clock; a UE directly synchronized to a gNB clock or an eNB clock; a UE indirectly synchronized to the gNB clock or the eNB clock; or a UE with a lowest priority.

In summary, in embodiments of the disclosure, the timing information sent by the second UE is received, in which the timing information is configured to calibrate the timing information of the SL PRS; and the timing synchronization source information sent by the second UE is received. In embodiments of the disclosure, the timing information and the timing synchronization source information sent by the second UE may be received, which may improve the accuracy of determining the timing difference between the plurality of SL PRSs, reduce the inaccuracy of determining the positioning information, and improve the accuracy of determining the positioning information. The disclosure provides a processing method for a "timing information interaction" scenario to calibrate timing information of the SL PRS based on the timing information and the timing synchronization source information sent by the second UE, which may improve the accuracy of determining the timing difference between the plurality of SL PRSs, and improve the accuracy of determining the positioning information.

FIG. 8 is a flowchart illustrating a method for timing information interaction according to an embodiment of the disclosure. The method is performed by a first UE. As shown in FIG. 8, the method may include the following step 801.

At step 801, timing information sent by a base station is received, in which the timing information is configured to calibrate timing information of an SL PRS.

In an embodiment of the disclosure, the method further includes: receiving timing synchronization source information sent by the base station.

In an embodiment of the disclosure, the first UE may receive the timing information and the timing synchronization source information sent by the base station simultaneously, or may receive the timing information and the timing synchronization source information sent by the base station separately.

Optionally, in an embodiment of the disclosure, a timing synchronization source corresponding to the timing synchronization source information includes at least one of: a GNSS clock; a reference UE clock; or a base station clock.

The reference UE clock may specifically be a GNSS clock of the reference UE or a base station clock of the reference UE.

In an embodiment of the disclosure, FIG. 9 is a schematic diagram illustrating an interaction of a method for timing information interaction according to an embodiment of the disclosure. As shown in FIG. 9, the base station may send the timing information to the first UE. The first UE may receive the timing information sent by the base station, in which the timing information is configured to calibrate the timing information of the SL PRS.

For example, in an embodiment of the disclosure, a network device is a location management function (LMF). The base station may receive the timing information sent by the LMF. The base station sends the timing information to the first UE, in which the timing information is configured to calibrate the timing information of the SL PRS. The first UE may receive the timing information sent by the base station.

For example, in an embodiment of the disclosure, the base station may receive the timing information sent by at least one positioning assistance UE. The base station sends the timing information to the first UE, in which the timing information is configured to calibrate the timing information of the SL PRS. The first UE may receive the timing information sent by the base station.

In summary, in embodiments of the disclosure, the timing information sent by the base station is received, in which the timing information is configured to calibrate the timing information of the SL PRS. In embodiments of the disclosure, the timing information between the plurality of SL PRSs may be calibrated, which may improve the accuracy of determining the timing difference between the plurality of SL PRSs, reduce the inaccuracy of determining the positioning information, and improve the accuracy of determining the positioning information. The disclosure provides a processing method for an "interaction of timing information" scenario to calibrate the timing information of the SL PRS, which may improve the accuracy of determining the timing difference between the plurality of SL PRSs, and improve the accuracy of determining the positioning information.

FIG. 10 is a flowchart illustrating a method for timing information interaction according to an embodiment of the disclosure. The method is performed by a second UE. As shown in FIG. 10, the method may include the following step 1001.

At step 1001, timing information is sent to a first UE, in which the timing information is configured to calibrate timing information of an SL PRS.

In an embodiment of the disclosure, the timing information of the SL PRS may be applied to at least one positioning method. The at least one positioning method includes, but is not limited to, an SL TDOA positioning a Multi-RTT positioning, etc.

In an embodiment of the disclosure, the method further includes receiving the timing information sent by a base station.

For example, in an embodiment of the disclosure, sending the timing information to the first UE includes: determining, based on an absolute timing for sending or receiving of at least one SL PRS sent by the base station, an absolute timing for sending or receiving of a first SL PRS as a reference timing, in which the absolute timing for sending or receiving of the first SL PRS is an absolute timing for sending or receiving of any SL PRS in the absolute timing for sending or receiving of the at least one SL PRS; calculating a relative timing of an absolute timing for sending or receiving of a second SL PRS to the absolute timing for sending or receiving of the first SL PRS, in which the absolute timing for sending or receiving of the second SL PRS is an absolute timing for sending or receiving of any SL PRS other than the absolute timing for sending or receiving of the first SL PRS in the absolute timing for sending or receiving of the at least one SL PRS; and sending the relative timing to the first UE.

For example, in an embodiment of the disclosure, the timing information includes at least one of: a timing offset of an SL link of at least one positioning assistance UE; a timing offset of a DL radio frame of a serving cell of the first UE; or a clock offset of the first UE.

For example, in an embodiment of the disclosure, while sending the timing information to the first UE, the method further includes: sending timing synchronization source information to the first UE.

For example, in an embodiment of the disclosure, a timing synchronization source corresponding to the timing synchronization source information includes at least one of: a GNSS; a UE directly synchronized to a GNSS clock; the UE, a gNB or an eNB directly synchronized to the GNSS clock; a UE directly synchronized to a gNB clock or an eNB clock; a UE indirectly synchronized to the gNB clock or the eNB clock; or a UE with a lowest priority.

In an embodiment of the disclosure, the second UE interacts with the first UE via at least one of following messages: an SCI message; an MAC CE message; an RRC message; or an NAS message.

In an embodiment of the disclosure, the NAS message includes at least one of: a LPP message; an SL LPP message; or a PCS-S message.

In an embodiment of the disclosure, the timing information includes at least one of: an absolute timing for SL PRS sending; a relative timing for SL PRS sending; a timing offset of an SL link of the first UE; an absolute timing for SL PRS receiving; a relative timing for SL PRS receiving; a clock offset of the first UE; or a timing offset for timing of a DL radio frame of a serving cell of the first UE.

In an embodiment of the disclosure, the absolute timing includes at least one of: a UTC timing; or a GNSS timing.

In an embodiment of the disclosure, a timing offset of an SL link includes a timing offset of an SL link radio frame of the first UE relative to a reference timing, and the timing offset relative to the reference timing includes at least one of: a timing relative to the DL radio frame of the serving cell of the first UE; a timing relative to a radio frame of an SL link of a reference UE; a timing relative to a DL radio frame of a network device for the serving cell of the first UE; or a timing relative to a DL radio frame of a UE or a network device of a reference cell.

In an embodiment of the disclosure, the clock offset of the first UE is an offset value of an internal clock in the first UE relative to a standard clock.

In summary, in embodiments of the disclosure, the timing information is sent to the first UE, in which the timing information is configured to calibrate the timing information of the SL PRS. In embodiments of the disclosure, the timing information may be sent to the first UE, and the first UE may calibrate the timing information between the plurality of SL PRSs, which may improve the accuracy of determining the timing difference between the plurality of SL PRSs, reduce the inaccuracy of determining the positioning information, and improve the accuracy of determining the positioning information. The disclosure provides a processing method for a "timing information interaction" scenario, in which the timing information is sent to the first UE, and the timing information of the SL PRS is calibrated by the first UE, which may improve the accuracy of determining the timing difference between the plurality of SL PRSs, and improve the accuracy of determining the positioning information.

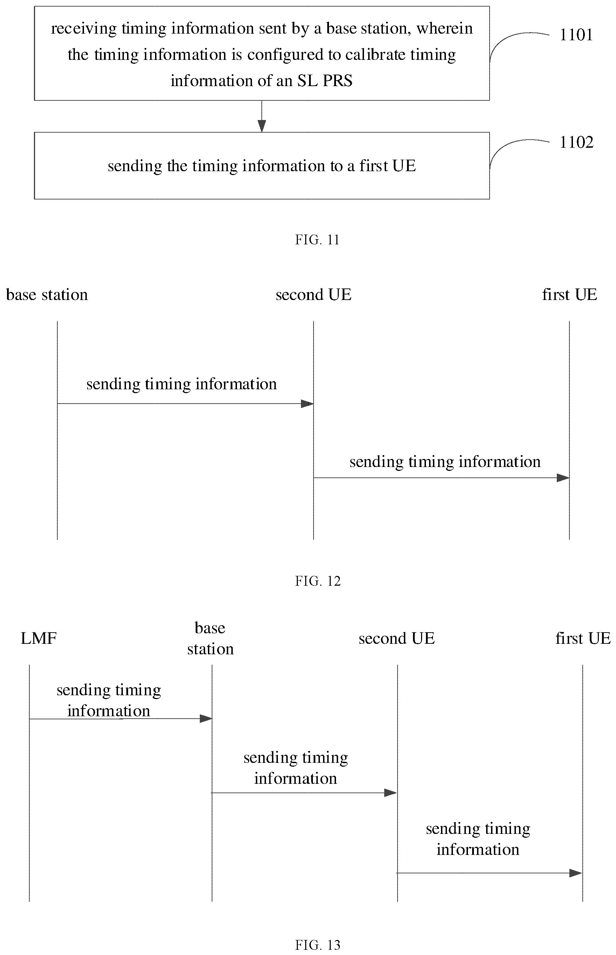

FIG. 11 is a flowchart illustrating a method for timing information interaction according to an embodiment of the disclosure. The method is performed by a second UE. As shown in FIG. 11, the method may include the following steps 1101 to 1102.

At step 1101, timing information sent by a base station is received, in which the timing information is configured to calibrate timing information of an SL PRS.

At step 1102, the timing information is sent to a first UE.

For example, in an embodiment of the disclosure, FIG. 12 is a schematic diagram illustrating an interaction of a method for timing information interaction according to an embodiment of the disclosure. As shown in FIG. 12, the base station may send the timing information to the second UE. The second UE may receive the timing information sent by the base station, in which the timing information is configured to calibrate the timing information of the SL PRS. The second UE may send the timing information to the first UE. The first UE may receive the timing information sent by the second UE and calibrate the timing information of the SL PRS based on the timing information.

For example, in an embodiment of the disclosure, FIG. 13 is a schematic diagram illustrating an interaction of a method for timing information interaction according to an embodiment of the disclosure. As shown in FIG. 13, the network device is an LMF. The LMF may send the timing information to the base station. The base station may send the timing information to the second UE. The second UE may receive the timing information sent by the base station, in which the timing information is configured to calibrate the timing information of the SL PRS. The second UE may send the timing information to the first UE. The first UE may receive the timing information sent by the second UE and calibrate the timing information of the SL PRS based on the timing information.

For example, in an embodiment of the disclosure, the timing information includes at least one of: a timing offset of an SL link of at least one positioning assistance UE; a timing offset of a DL radio frame of a serving cell of the first UE; or a clock offset of the first UE.

For example, in an embodiment of the disclosure, the network device may be an LMF. When obtaining the timing offset of the SL link of the first UE, if a difference or the timing offset of the DL radio frame of the serving cell of the first UE is calculated based on a DL timing of a UU interface, the base station or the LMF may consider a time delay of transmission of the DL signal from the network device to the first UE. The time delay may be determined based on a relative distance between the base station and the first UE. The relative distance between the base station and the first UE may be determined using positioning means such as UL-TDOA, DL-TDOA, multiple RTT, AOA or AOD, GNSS, or using values measured in advance.

In an embodiment of the disclosure, the second UE interacts with the first UE via at least one of following messages: an SCI message; an MAC CE message; an RRC message; or an NAS message.

In an embodiment of the disclosure, the NAS message includes at least one of: a LPP message; an SL LPP message; or a PCS-S message.

In some embodiments of the disclosure, the SCI message may be a control message sent on the SL link. For example, the RRC message may be a system message sent on the SL link. For example, the MAC CE message may be a message sent on the SL link. The MAC CE message is a message that indicates on how to allocate the right to use a common channel when the use of the common channel creates a competition.

In some embodiments of the disclosure, for example, the LPP message may include a positioning protocol for transmission between the UEs. For example, the LPP message may support a plurality of positioning messages. For example, the LPP may support an assisted global navigation satellite system (A-GNSS), observed timing difference of arrival (OTDOA), and hybrid positioning of A-GNSS and OTDOA, etc. For example, the SL LPP message may include a positioning protocol for transmission over an SL link between the UEs. The PCS-S message is a message transmitted via a PC5-S interface between the UEs.

In an embodiment of the disclosure, the timing information includes at least one of: an absolute timing for SL PRS sending; a relative timing for SL PRS sending; a timing offset of an SL link of the first UE; an absolute timing for SL PRS receiving; a relative timing for SL PRS receiving; a clock offset of the first UE; or a timing offset for timing of a DL radio frame of a serving cell of the first UE.

In an embodiment of the disclosure, the absolute timing includes at least one of: a UTC timing; or a GNSS timing.

In an embodiment of the disclosure, a timing offset of an SL link includes a timing offset of an SL link radio frame of the first UE relative to a reference timing, and the timing offset relative to the reference timing includes at least one of: a timing relative to the DL radio frame of the serving cell of the first UE; a timing relative to a radio frame of an SL link of a reference UE; a timing relative to a DL radio frame of a network device for the serving cell of the first UE; or a timing relative to a DL radio frame of a UE or a network device of a reference cell.

In an embodiment of the disclosure, the clock offset of the first UE is an offset value of an internal clock in the first UE relative to a standard clock.

In summary, in embodiments of the disclosure, the timing information sent by the base station is received, in which the timing information is configured to calibrate the timing information of the SL PRS; and the timing information is sent to the first UE. In embodiments of the disclosure, the timing information sent by the base station may be received, the timing information may be sent to the first UE, and the first UE may calibrate the timing information between the plurality of SL PRSs, which may improve the accuracy of determining the timing difference between the plurality of SL PRSs, reduce the inaccuracy of determining the positioning information, and improve the accuracy of determining the positioning information. The disclosure provides a processing method for a "timing information interaction" scenario, in which the timing information is sent to the first UE, and the timing information between the SL PRS is calibrated by the first UE, which may improve the accuracy of determining the timing difference between the plurality of SL PRSs, and improve the accuracy of determining the positioning information.

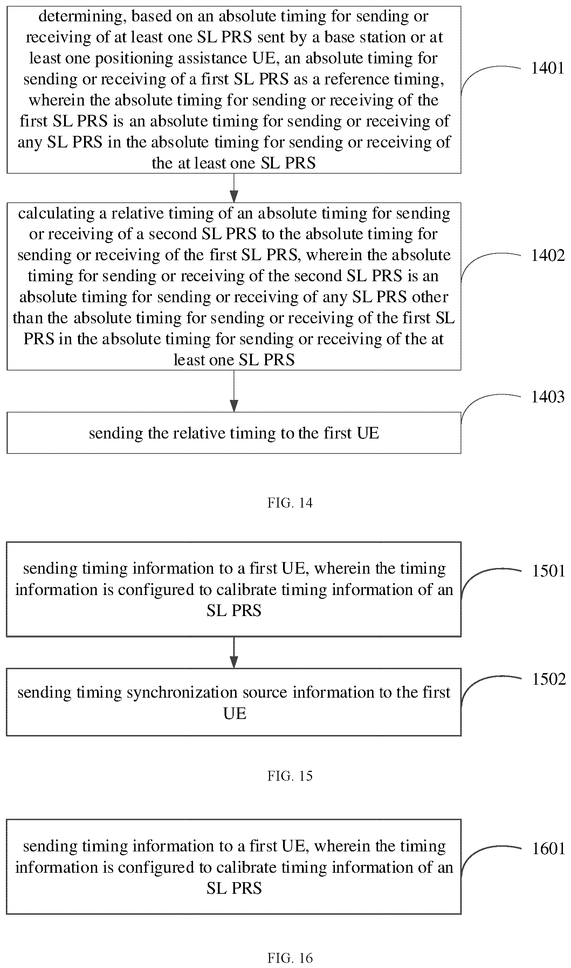

FIG. 14 is a flowchart illustrating a method for timing information interaction according to an embodiment of the disclosure. The method is performed by a second UE. As shown in FIG. 14, the method may include the following steps 1401 to 1403.

At step 1401, an absolute timing for sending or receiving of a first SL PRS is determined as a reference timing based on an absolute timing for sending or receiving of at least one SL PRS sent by a base station or at least one positioning assistance UE, in which the absolute timing for sending or receiving of the first SL PRS is an absolute timing for sending or receiving of any SL PRS in the absolute timing for sending or receiving of the at least one SL PRS.

At step 1402, a relative timing of an absolute timing for sending or receiving of a second SL PRS to the absolute timing for sending or receiving of the first SL PRS is calculated, in which the absolute timing for sending or receiving of the second SL PRS is an absolute timing for sending or receiving of any SL PRS other than the absolute timing for sending or receiving of the first SL PRS in the absolute timing for sending or receiving of the at least one SL PRS.

At step 1403, the relative timing is sent to the first UE.

For example, in an embodiment of the disclosure, the second UE may receive the absolute timing for sending or receiving of the at least one SL PRS sent by the base station or the at least one positioning assistance UE. The second UE may determine, based on the absolute timing for sending or receiving of the at least one SL PRS sent by the base station or the at least one positioning assistance UE, the absolute timing for sending or receiving of the first SL PRS as the reference timing. The absolute timing for sending or receiving of the first SL PRS is the absolute timing for sending or receiving of any SL PRS in the absolute timing for sending or receiving of the at least one SL PRS. The second UE may calculate the relative timing of the absolute timing for sending or receiving of the second SL PRS to the absolute timing for sending or receiving of the first SL PRS. The absolute timing for sending or receiving of the second SL PRS is the absolute timing for sending or receiving of any SL PRS, other than the absolute timing for sending or receiving of the first SL PRS, in the absolute timing for sending or receiving of the at least one SL PRS. The second UE may send the relative timing to the first UE.

For example, in an embodiment of the disclosure, the relative timing of the SL PRS as a reference may be zero, and the second UE may not send the relative timing of the SL PRS as a reference to the first UE. The first UE may determine by default that the relative timing of the SL PRS is zero in the case where the relative timing is not received.

In an embodiment of the disclosure, the second UE interacts with the first UE via at least one of following messages: an SCI message; an MAC CE message; an RRC message; or an NAS message.

In an embodiment of the disclosure, the NAS message includes at least one of: a LPP message; an SL LPP message; or a PCS-S message.

In an embodiment of the disclosure, the timing information includes at least one of: an absolute timing for SL PRS sending; a relative timing for SL PRS sending; a timing offset of an SL link of the first UE; an absolute timing for SL PRS receiving; a relative timing for SL PRS receiving; a clock offset of the first UE; or a timing offset for timing of a DL radio frame of a serving cell of the first UE.

In an embodiment of the disclosure, the absolute timing includes at least one of: a UTC timing; or a GNSS timing.

In an embodiment of the disclosure, a timing offset of an SL link includes a timing offset of an SL link radio frame of the first UE relative to a reference timing, and the timing offset relative to the reference timing includes at least one of: a timing relative to the DL radio frame of the serving cell of the first UE; a timing relative to a radio frame of an SL link of a reference UE; a timing relative to a DL radio frame of a network device for the serving cell of the first UE; or a timing relative to a DL radio frame of a UE or a network device of a reference cell.

In an embodiment of the disclosure, the clock offset of the first UE is an offset value of an internal clock in the first UE relative to a standard clock.

In summary, in embodiments of the disclosure, the absolute timing for sending or receiving of the first SL PRS is determined as the reference timing based on the absolute timing for sending or receiving of the at least one SL PRS sent by the base station or the at least one positioning assistance UE, in which the absolute timing for sending or receiving of the first SL PRS is the absolute timing for sending or receiving of any SL PRS in the absolute timing for sending or receiving of the at least one SL PRS; the relative timing of the absolute timing for sending or receiving of the second SL PRS to the absolute timing for sending or receiving of the first SL PRS is calculated, in which the absolute timing for sending or receiving of the second SL PRS is the absolute timing for sending or receiving of any SL PRS other than the absolute timing for sending or receiving of the first SL PRS in the absolute timing for sending or receiving of the at least one SL PRS; and the relative timing is sent to the first UE. In embodiments of the disclosure, the timing information may be sent to the first UE, and the first UE may calibrate the timing information between the plurality of SL PRSs, which may improve the accuracy of determining the timing difference between the plurality of SL PRSs, reduce the inaccuracy of determining the positioning information, and improve the accuracy of determining the positioning information. Embodiments of the disclosure disclose features that the sent timing information is specifically the relative timing, and a specific scheme for determining the relative timing, thus improving the accuracy of determining the positioning information. The disclosure provides a processing method for a "timing information interaction" scenario, in which the timing information is sent to the first UE, and the timing information of the SL PRS is calibrated by the first UE, which may improve the accuracy of determining the timing difference between the plurality of SL PRSs, and improve the accuracy of determining the positioning information.

FIG. 15 is a flowchart illustrating a method for timing information interaction according to an embodiment of the disclosure. The method is performed by a second UE. As shown in FIG. 15, the method may include the following steps 1501 to 1502.

At step 1501, timing information is sent to a first UE, in which the timing information is configured to calibrate timing information of an SL PRS.

At step 1502, timing synchronization source information is sent to the first UE.

In an embodiment of the disclosure, step 1501 and step 1502 may be performed simultaneously or separately. That is, the second UE may send the timing synchronization source information to the first UE while sending the timing information to the first UE, or the second UE may first send the timing information to the first UE, and then send the timing synchronization source information to the first UE.

For example, in an embodiment of the disclosure, a timing synchronization source corresponding to the timing synchronization source information includes at least one of: a GNSS; a UE directly synchronized to a GNSS clock; the UE, a gNB or an eNB directly synchronized to the GNSS clock; a UE directly synchronized to a gNB clock or an eNB clock; a UE indirectly synchronized to the gNB clock or the eNB clock; or a UE with a lowest priority.

In an embodiment of the disclosure, the second UE interacts with the first UE via at least one of following messages: an SCI message; an MAC CE message; an RRC message; or an NAS message.

In an embodiment of the disclosure, the NAS message includes at least one of: a LPP message; an SL LPP message; or a PCS-S message.

In an embodiment of the disclosure, the timing information includes at least one of: an absolute timing for SL PRS sending; a relative timing for SL PRS sending; a timing offset of an SL link of the first UE; an absolute timing for SL PRS receiving; a relative timing for SL PRS receiving; a clock offset of the first UE; or a timing offset for timing of a DL radio frame of a serving cell of the first UE.

In an embodiment of the disclosure, the absolute timing includes at least one of: a UTC timing; or a GNSS timing.

In an embodiment of the disclosure, a timing offset of an SL link includes a timing offset of an SL link radio frame of the first UE relative to a reference timing, and the timing offset relative to the reference timing includes at least one of: a timing relative to the DL radio frame of the serving cell of the first UE; a timing relative to a radio frame of an SL link of a reference UE; a timing relative to a DL radio frame of a network device for the serving cell of the first UE; or a timing relative to a DL radio frame of a UE or a network device of a reference cell.

In an embodiment of the disclosure, the clock offset of the first UE is an offset value of an internal clock in the first UE relative to a standard clock.

In summary, in embodiments of the disclosure, the timing information sent by the second UE is received, in which the timing information is configured to calibrate the timing information of the SL PRS; and the timing synchronization source information is sent to the first UE while sending the timing information to the first UE. In embodiments of the disclosure, the timing information may be interacted with the second UE, i.e., the timing information may be sent to the first UE, and the first UE may calibrate the timing information between the plurality of SL PRSs, which may improve the accuracy of determining the timing difference between the plurality of SL PRSs, reduce the inaccuracy of determining the positioning information, and improve the accuracy of determining the positioning information. Embodiments of the disclosure also disclose a specific scheme for sending the timing synchronization source information to the first UE, thus improving the accuracy of determining positioning information. The disclosure provides a processing method for a "timing information interaction" scenario, in which the timing information is sent to the first UE, and the timing information of the SL PRS is calibrated by the first UE, which may improve the accuracy of determining the timing difference between the plurality of SL PRSs, and improve the accuracy of determining the positioning information.

FIG. 16 is a flowchart illustrating a method for timing information interaction according to an embodiment of the disclosure. The method is performed by a base station. As shown in FIG. 16, the method may include the following step 1601.

At step 1601, timing information is sent to a first UE, in which the timing information is configured to calibrate timing information of an SL PRS.

Optionally, in an embodiment of the disclosure, the method further includes: receiving the timing information sent by at least one positioning assistance UE.

In an embodiment of the disclosure, the method further includes: determining, based on an absolute timing for sending or receiving of at least one SL PRS sent by the at least one positioning assistance UE, an absolute timing for sending or receiving of a first SL PRS as a reference timing, in which the absolute timing for sending or receiving of the first SL PRS is an absolute timing for sending or receiving of any SL PRS in the absolute timing for sending or receiving of the at least one SL PRS; calculating a relative timing of an absolute timing for sending or receiving of a second SL PRS to the absolute timing for sending or receiving of the first SL PRS, in which the absolute timing for sending or receiving of the second SL PRS is an absolute timing for sending or receiving of any SL PRS other than the absolute timing for sending or receiving of the first SL PRS in the absolute timing for sending or receiving of the at least one SL PRS; and sending the relative timing to the first UE.

In an embodiment of the disclosure, the method further includes: sending the absolute timing for sending or receiving of the at least one SL PRS to the second UE.

For example, in an embodiment of the disclosure, before sending the timing information to the first UE, the method further includes at least one of: obtaining a timing offset of an SL link of the at least one positioning assistance UE sent by the at least one positioning assistance UE; obtaining a timing offset of a DL radio frame of a serving cell of the first UE; or obtaining a clock offset of the first UE.

In an embodiment of the disclosure, when the base station may send the timing information to the first UE, the timing information may include at least one of the following timing offsets: a timing offset of an SL link of at least one positioning assistance UE; a timing offset of a DL radio frame of a serving cell of the first UE; or a clock offset of the first UE.

In an embodiment of the disclosure, the method further includes: sending at least one of the following timing offsets to a second UE: the timing offset of the SL link of the at least one positioning assistance UE; the timing offset of the DL radio frame of the serving cell of the first UE; or the clock offset of the first UE.

In an embodiment of the disclosure, the method further includes: sending timing synchronization source information to the first UE.

In an embodiment of the disclosure, a timing synchronization source corresponding to the timing synchronization source information includes at least one of: clock information of a GNSS; clock information of a reference UE; or clock information of the base station.

Optionally, in an embodiment of the disclosure, the method further includes: receiving the timing information sent by a network device.

In summary, in embodiments of the disclosure, the timing information is sent to the first UE, in which the timing information is configured to calibrate the timing information of an SL PRS. In embodiments of the disclosure, the timing information may be sent to the first UE, and the first UE may calibrate the timing information between the plurality of SL PRSs, which may improve the accuracy of determining the timing difference between the plurality of SL PRSs, reduce the inaccuracy of determining the positioning information, and improve the accuracy of determining the positioning information. The disclosure provides a processing method for a "timing information interaction" scenario, in which the timing information is sent to the first UE, and the timing information of the SL PRS is calibrated by the first UE, which may improve the accuracy of determining the timing difference between the plurality of SL PRSs, and improve the accuracy of determining the positioning information.

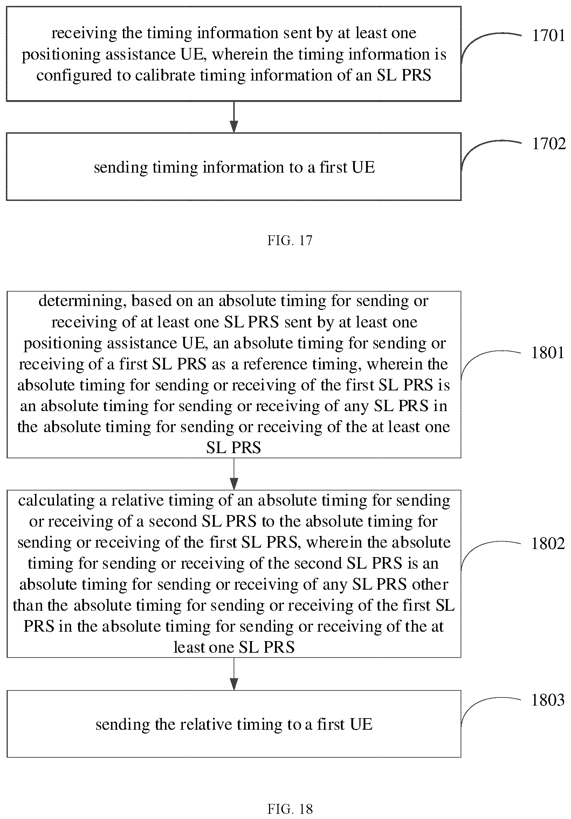

FIG. 17 is a flowchart illustrating a method for timing information interaction according to an embodiment of the disclosure. The method is performed by a base station. As shown in FIG. 17, the method may include the following steps 1701 to 1702.

At step 1701, timing information sent by at least one positioning assistance UE is received, in which the timing information is configured to calibrate timing information of an SL PRS.

At step 1702, the timing information is sent to a first UE.

In an embodiment of the disclosure, the base station may receive the timing information sent by the at least one positioning assistance UE. The base station sends the timing information to the first UE, in which the timing information is configured to calibrate the timing information of the SL PRS.

In summary, in embodiments of the disclosure, the timing information sent by the at least one positioning assistance UE is received; and the timing information is sent to the first UE, in which the timing information is configured to calibrate the timing information of the SL PRS. In embodiments of the disclosure, the timing information may be sent to the first UE, and the first UE may calibrate the timing information between the plurality of SL PRSs, which may improve the accuracy of determining the timing difference between the plurality of SL PRSs, reduce the inaccuracy of determining the positioning information, and improve the accuracy of determining the positioning information. Embodiments of the disclosure also disclose a specific scheme for sending and receiving the timing information transmitted by the at least one positioning assistance UE or the base station, thus improving the accuracy of determining the positioning information. The disclosure provides a processing method for a "timing information interaction" scenario, in which the timing information is sent to the first UE, and the timing information of the SL PRS is calibrated by the first UE, which may improve the accuracy of determining the timing difference between the plurality of SL PRSs, and improve the accuracy of determining the positioning information.

FIG. 18 is a flowchart illustrating a method for timing information interaction according to an embodiment of the disclosure. The method is performed by a base station. As shown in FIG. 18, the method may include the following steps 1801 to 1803.

At step 1801, an absolute timing for sending or receiving of a first SL PRS is determined as a reference timing based on an absolute timing for sending or receiving of at least one SL PRS sent by the at least one positioning assistance UE, in which the absolute timing for sending or receiving of the first SL PRS is an absolute timing for sending or receiving of any SL PRS in the absolute timing for sending or receiving of the at least one SL PRS.

At step 1802, a relative timing of an absolute timing for sending or receiving of a second SL PRS to the absolute timing for sending or receiving of the first SL PRS is calculated, in which the absolute timing for sending or receiving of the second SL PRS is an absolute timing for sending or receiving of any SL PRS other than the absolute timing for sending or receiving of the first SL PRS in the absolute timing for sending or receiving of the at least one SL PRS.

At step 1803, the relative timing is sent to a first UE.

In an embodiment of the disclosure, steps 1801-1803 are described above in detail.

For example, in an embodiment of the disclosure, the relative timing of the SL PRS as a reference may be zero, and the second UE may not send the relative timing of the SL PRS as a reference to the first UE. The first UE may determine by default that the relative timing of the SL PRS is zero in the case where the relative timing is not received.

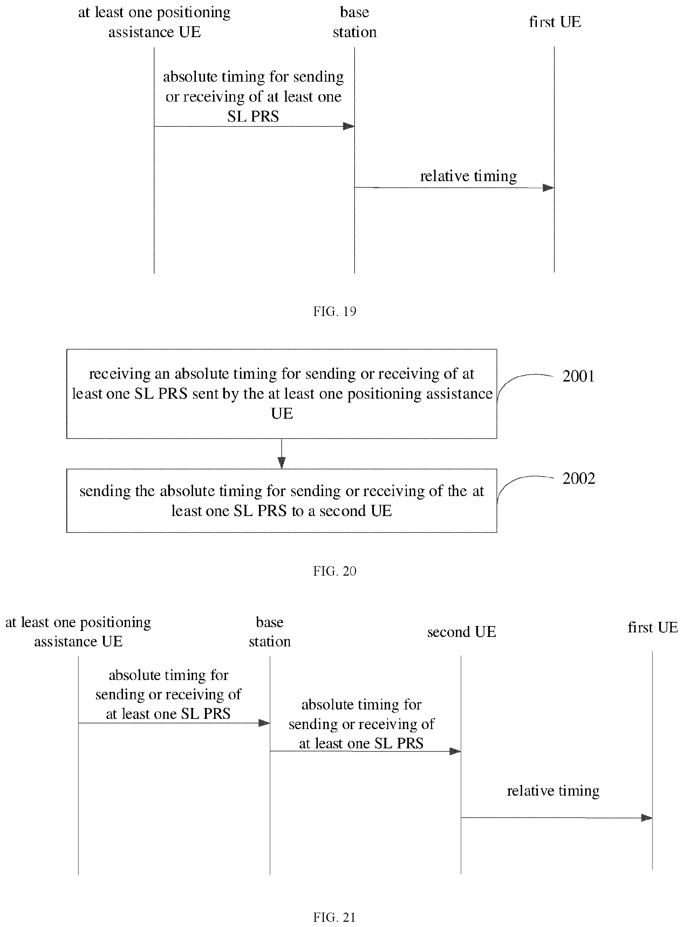

In summary, in embodiments of the disclosure, FIG. 19 is a schematic diagram illustrating an interaction of a method for timing information interaction according to an embodiment of the disclosure. As shown in FIG. 19 the base station may determine the relative timing based on the absolute timing for sending or receiving of the at least one SL PRS sent by the at least one positioning assistance UE, and send the relative timing to the first UE. In embodiments of the disclosure, the timing information may be sent to the first UE, and the first UE may calibrate the timing information between the plurality of SL PRSs, which may improve the accuracy of determining the timing difference between the plurality of SL PRSs, reduce the inaccuracy of determining the positioning information, and improve the accuracy of determining the positioning information. The disclosure provides a processing method for a "timing information interaction" scenario, in which the timing information is sent to the first UE, and the timing information of the SL PRS is calibrated by the first UE, which may improve the accuracy of determining the timing difference between the plurality of SL PRSs, and improve the accuracy of determining the positioning information.

FIG. 20 is a flowchart illustrating a method for timing information interaction according to an embodiment of the disclosure. The method is performed by a base station. As shown in FIG. 20, the method may include the following steps 2001 to 2002.

At step 2001, an absolute timing for sending or receiving of at least one SL PRS sent by the at least one positioning assistance UE is received.

At step 2002, the absolute timing for sending or receiving of the at least one SL PRS is sent to a second UE.

In an embodiment of the disclosure, the base station interacts with the UE via at least one of following messages: an SCI message; an MAC CE message; an RRC message; or an NAS message.

In an embodiment of the disclosure, the NAS message includes at least one of: a LPP message; an SL LPP message; or a PCS-S message.

In an embodiment of the disclosure, FIG. 21 is a schematic diagram illustrating an interaction of a method for timing information interaction according to an embodiment of the disclosure. As shown in FIG. 21, the base station may receive the absolute timing for sending or receiving of the at least one SL PRS sent by the at least one positioning assistance UE. The base station may send the absolute timing for sending or receiving of the at least one SL PRS to the second UE. The second UE may receive the absolute timing for sending or receiving of the at least one SL PRS sent by the base station. The second UE may determine, based on the received absolute timing for sending or receiving of at least one SL PRS, the absolute timing for sending or receiving of the first SL PRS as the reference timing, in which the absolute timing for sending or receiving of the first SL PRS is the absolute timing for sending or receiving of any SL PRS in the absolute timing for sending or receiving of the at least one SL PRS. The second UE may calculate the relative timing of the absolute timing for sending or receiving of the second SL PRS to the absolute timing for sending or receiving of the first SL PRS, in which the absolute timing for sending or receiving of the second SL PRS is the absolute timing for sending or receiving of any SL PRS other than the absolute timing for sending or receiving of the first SL PRS in the absolute timing for sending or receiving of the at least one SL PRS. The second UE may send the relative timing to the first UE.

In summary, in embodiments of the disclosure, the base station may receive the absolute timing for sending or receiving of the at least one SL PRS sent by the at least one positioning assistance UE, and send the absolute timing for sending or receiving of the at least one SL PRS to the second UE. In embodiments of the disclosure, the relative timing may be sent to the second UE, so that the second UE sends the relative timing to the first UE, and the first UE may calibrate the timing information between the plurality of SL PRSs, which may improve the accuracy of determining the timing difference between the plurality of SL PRSs, reduce the inaccuracy of determining the positioning information, and improve the accuracy of determining the positioning information. The disclosure provides a processing method for a "timing information interaction" scenario, in which the relative timing is sent to the second UE, so that the relative timing may be sent to the first UE via the second UE, and the timing information of the SL PRS is calibrated by the first UE, which may improve the accuracy of determining the timing difference between the plurality of SL PRSs, and improve the accuracy of determining the positioning information.

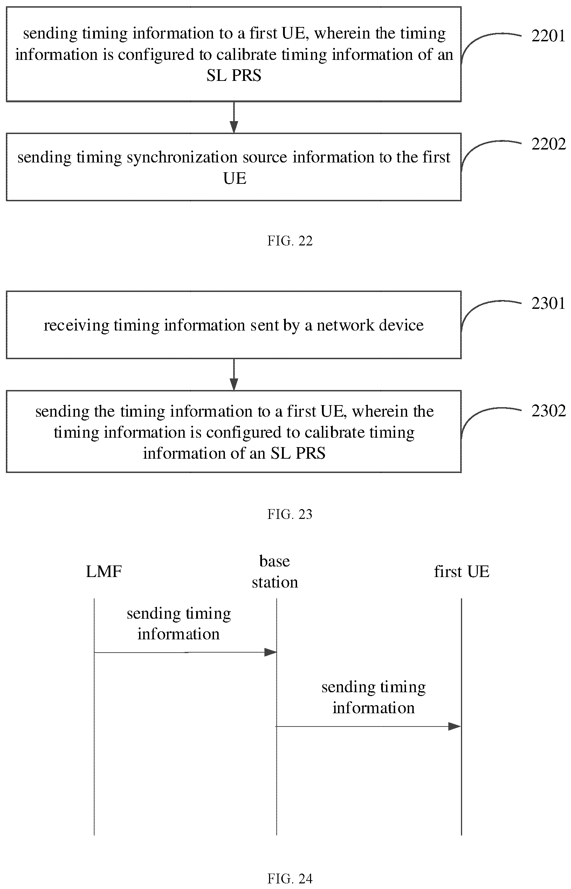

FIG. 22 is a flowchart illustrating a method for timing information interaction according to an embodiment of the disclosure. The method is performed by a base station. As shown in FIG. 22, the method may include the following steps 2201 to 2202.

At step 2201, timing information is sent to a first UE, in which the timing information is configured to calibrate timing information of an SL PRS.

At step 2202, timing synchronization source information is sent to the first UE.

In an embodiment of the disclosure, step 2201 and step 2202 may be performed simultaneously or separately. That is, the base station may send the timing synchronization source information to the first UE while sending the timing information to the first UE, or the base station may first send the timing information to the first UE, and then send the timing synchronization source information to the first UE.

For example, in an embodiment of the disclosure, a timing synchronization source corresponding to the timing synchronization source information includes at least one of: a GNSS clock; a reference UE clock; or a base station clock.

In an embodiment of the disclosure, the base station interacts with the first UE via at least one of following messages: an SCI message; an MAC CE message; an RRC message; or an NAS message.

In an embodiment of the disclosure, the NAS message includes at least one of: a LPP message; an SL LPP message; or a PCS-S message.

In an embodiment of the disclosure, the timing information includes at least one of: an absolute timing for SL PRS sending; a relative timing for SL PRS sending; a timing offset of an SL link of the first UE; an absolute timing for SL PRS receiving; a relative timing for SL PRS receiving; a clock offset of the first UE; or a timing offset for timing of a DL radio frame of a serving cell of the first UE.

In an embodiment of the disclosure, the absolute timing includes at least one of: a UTC timing; or a GNSS timing.

In an embodiment of the disclosure, a timing offset of an SL link includes a timing offset of an SL link radio frame of the first UE relative to a reference timing, and the timing offset relative to the reference timing includes at least one of: a timing relative to the DL radio frame of the serving cell of the first UE; a timing relative to a radio frame of an SL link of a reference UE; a timing relative to a DL radio frame of a network device for the serving cell of the first UE; or a timing relative to a DL radio frame of a UE or a network device of a reference cell.

In an embodiment of the disclosure, the clock offset of the first UE is an offset value of an internal clock in the first UE relative to a standard clock.

In summary, in embodiments of the disclosure, the timing synchronization source information is sent to the first UE while sending the timing information to the first UE. In embodiments of the disclosure, the timing information and the timing synchronization source information may be sent to the first UE, and the first UE may calibrate the timing information between the plurality of SL PRSs, which may improve the accuracy of determining the timing difference between the plurality of SL PRSs, reduce the inaccuracy of determining the positioning information, and improve the accuracy of determining the positioning information. Embodiments of the disclosure also disclose a specific scheme for sending the timing synchronization source information to the first UE, thus improving the accuracy of determining positioning information. The disclosure provides a processing method for a "timing information interaction" scenario, in which the timing information is sent to the first UE, and the timing information of the SL PRS is calibrated by the first UE, which may improve the accuracy of determining the timing difference between the plurality of SL PRSs, and improve the accuracy of determining the positioning information.

FIG. 23 is a flowchart illustrating a method for timing information interaction according to an embodiment of the disclosure. The method is performed by a base station. As shown in FIG. 23, the method may include the following steps 2301 to 2302.

At step 2301, timing information sent by a network device is received.

At step 2302, the timing information is sent to a first UE, in which the timing information is configured to calibrate timing information of an SL PRS.

In an embodiment of the disclosure, FIG. 24 is a schematic diagram illustrating an interaction of a method for timing information interaction according to an embodiment of the disclosure. As shown in FIG. 24, the network device is an LMF. The base station may receive the timing information sent by the LMF. The base station sends the timing information to the first UE, in which the timing information is configured to calibrate the timing information of the SL PRS.

For example, in an embodiment of the disclosure, a timing synchronization source corresponding to the timing synchronization source information includes at least one of: a GNSS clock; a reference UE clock; or a base station clock.

In an embodiment of the disclosure, the base station interacts with the first UE via at least one of following messages: an SCI message; an MAC CE message; an RRC message; or an NAS message.

In an embodiment of the disclosure, the NAS message includes at least one of: a LPP message; an SL LPP message; or a PCS-S message.

In an embodiment of the disclosure, the timing information includes at least one of: an absolute timing for SL PRS sending; a relative timing for SL PRS sending; a timing offset of an SL link of the first UE; an absolute timing for SL PRS receiving; a relative timing for SL PRS receiving; a clock offset of the first UE; or a timing offset for timing of a DL radio frame of a serving cell of the first UE.

In an embodiment of the disclosure, the absolute timing includes at least one of: a UTC timing; or a GNSS timing.

In an embodiment of the disclosure, a timing offset of an SL link includes a timing offset of an SL link radio frame of the first UE relative to a reference timing, and the timing offset relative to the reference timing includes at least one of: a timing relative to the DL radio frame of the serving cell of the first UE; a timing relative to a radio frame of an SL link of a reference UE; a timing relative to a DL radio frame of a network device for the serving cell of the first UE; or a timing relative to a DL radio frame of a UE or a network device of a reference cell.

In an embodiment of the disclosure, the clock offset of the first UE is an offset value of an internal clock in the first UE relative to a standard clock.

In summary, in embodiments of the disclosure, the timing information sent by the network device is received; and the timing information is sent to the first UE, in which the timing information is configured to calibrate the timing information of the SL PRS. In embodiments of the disclosure, the timing information may be sent to the first UE, and the first UE may calibrate the timing information between the plurality of SL PRSs, which may improve the accuracy of determining the timing difference between the plurality of SL PRSs, reduce the inaccuracy of determining the positioning information, and improve the accuracy of determining the positioning information. Embodiments of the disclosure also disclose a specific scheme for transmitting the timing information by the network device and the base station, thus improving the accuracy of determining the positioning information. The disclosure provides a processing method for a "timing information interaction" scenario, in which the timing information is sent to the first UE, and the timing information of the SL PRS is calibrated by the first UE, which may improve the accuracy of determining the timing difference between the plurality of SL PRSs, and improve the accuracy of determining the positioning information.

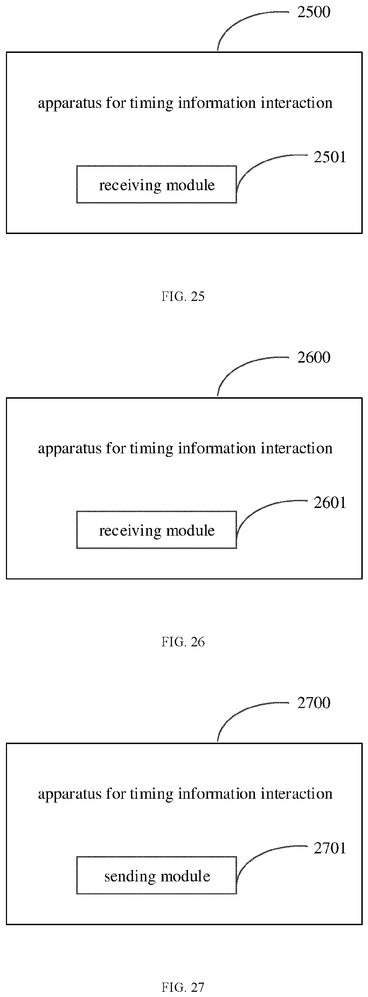

FIG. 25 is a structural block diagram illustrating an apparatus for timing information interaction according to an embodiment of the disclosure. As shown in FIG. 25, the apparatus 2500 may be configured in a first UE. The apparatus 2500 may include a receiving module 2501.

The receiving module 2501 is configured to receive timing information sent by a second UE, in which the timing information is configured to calibrate timing information of an SL PRS.

In summary, in the apparatus for timing information interaction according to the embodiments of the disclosure, the timing information sent by the second UE device is received via the receiving module, in which the timing information is configured to calibrate the timing information of the SL PRS. In embodiments of the disclosure, the timing information between the plurality of SL PRSs may be calibrated, which may improve the accuracy of determining the timing difference between the plurality of SL PRSs, reduce the inaccuracy of determining the positioning information, and improve the accuracy of determining the positioning information. The disclosure provides a processing apparatus for a "timing information interaction" scenario to calibrate the timing information of the SL PRS, which may improve the accuracy of determining the timing difference between the plurality of SL PRSs, and improve the accuracy of determining the positioning information.

Optionally, in an embodiment of the disclosure, the timing information includes at least one of: an absolute timing for SL PRS sending; a relative timing for SL PRS sending; a timing offset of an SL link of the first UE; an absolute timing for SL PRS receiving; a relative timing for SL PRS receiving; a clock offset of the first UE; or a timing offset for timing of a DL radio frame of a serving cell of the first UE.

Optionally, in an embodiment of the disclosure, the absolute timing includes at least one of: a UTC timing; or a GNSS timing.

Optionally, in an embodiment of the disclosure, a timing offset of an SL link includes a timing offset of an SL link radio frame of the first UE relative to a reference timing, and the timing offset relative to the reference timing includes at least one of: a timing relative to the DL radio frame of the serving cell of the first UE; a timing relative to a radio frame of an SL link of a reference UE; a timing relative to a DL radio frame of a network device for the serving cell of the first UE; or a timing relative to a DL radio frame of a UE or a network device of a reference cell.

Optionally, in an embodiment of the disclosure, the clock offset of the first UE is an offset value of an internal clock in the first UE relative to a standard clock.

Optionally, in an embodiment of the disclosure, the receiving module 2501 is further configured to receive a sending timing of the SL PRS sent by at least one positioning reference UE, in which the sending timing includes an absolute sending timing or a relative sending timing; determine, based on a receiving timing of the SL PRS and the sending timing, at least one one-way propagation delay; and determine, based on a difference and a timing offset between the at least one one-way propagation delay, a value of TDOA, in which the timing offset includes the timing offset of the SL link of the first UE and/or the clock offset of the first UE.

Optionally, in an embodiment of the disclosure, the receiving module 2501 is further configured to perform information interaction with the second UE via at least one of following messages: an SCI message; an MAC CE message; an RRC message; or an NAS message.

Optionally, in an embodiment of the disclosure, the NAS message includes at least one of: a LPP message; an SL LPP message; or a PCS-S message.

Optionally, in an embodiment of the disclosure, the receiving module 2501 is further configured to receive timing synchronization source information sent by the second UE.

Optionally, in an embodiment of the disclosure, a timing synchronization source corresponding to the timing synchronization source information includes at least one of: a GNSS; a UE directly synchronized to a GNSS clock; the UE, a gNB or an eNB directly synchronized to the GNSS clock; a UE directly synchronized to a gNB clock or an eNB clock; a UE indirectly synchronized to the gNB clock or the eNB clock; or a UE with a lowest priority.

FIG. 26 is a structural block diagram illustrating an apparatus for timing information interaction according to an embodiment of the disclosure. As shown in FIG. 26, the apparatus 2600 may be configured in a first UE. The apparatus 2600 may include a receiving module 2601.

The receiving module 2601 is configured to receive timing information sent by a base station, in which the timing information is configured to calibrate timing information of an SL PRS.

In summary, in the apparatus for timing information interaction according to the embodiments of the disclosure, the timing information sent by the base station device is received via the receiving module, in which the timing information is configured to calibrate the timing information of the SL PRS. In embodiments of the disclosure, the timing information between the plurality of SL PRSs may be calibrated, which may improve the accuracy of determining the timing difference between the plurality of SL PRSs, reduce the inaccuracy of determining the positioning information, and improve the accuracy of determining the positioning information. The disclosure provides a processing apparatus for a "timing information interaction" scenario to calibrate timing information of the SL PRS, which may improve the accuracy of determining the timing difference between the plurality of SL PRSs, and improve the accuracy of determining the positioning information.

Optionally, in an embodiment of the disclosure, the receiving module 2601 is further configured to receive timing synchronization source information sent by the base station.

Optionally, in an embodiment of the disclosure, a timing synchronization source corresponding to the timing synchronization source information includes at least one of: a GNSS clock; a reference UE clock; or a base station clock.

FIG. 27 is a structural block diagram illustrating an apparatus for timing information interaction according to an embodiment of the disclosure. As shown in FIG. 27, the apparatus 2700 may be configured in a second UE. The apparatus 2700 may include a sending module 2701.

The sending module 2701 is configured to send timing information to a first UE, in which the timing information is configured to calibrate timing information of an SL PRS.

In summary, in the apparatus for timing information interaction according to the embodiments of the disclosure, the timing information is sent to the first UE device via the sending module, in which the timing information is configured to calibrate the timing information of the SL PRS. In embodiments of the disclosure, the timing information may be sent to the first UE, and the first UE may calibrate the timing information between the plurality of SL PRSs, which may improve the accuracy of determining the timing difference between the plurality of SL PRSs, reduce the inaccuracy of determining the positioning information, and improve the accuracy of determining the positioning information. The disclosure provides a processing apparatus for a "timing information interaction" scenario, in which the timing information is sent to the first UE, and the timing information of the SL PRS is calibrated by the first UE, which may improve the accuracy of determining the timing difference between the plurality of SL PRSs, and improve the accuracy of determining the positioning information.

Optionally, in an embodiment of the disclosure, the sending module 2701 is further configured to receive the timing information sent by a base station.

Optionally, in an embodiment of the disclosure, when the timing information is sent to the first UE, the sending module 2701 is specifically configured to determine, based on an absolute timing for sending or receiving of at least one SL PRS sent by the base station or at least one positioning assistance UE, an absolute timing for sending or receiving of a first SL PRS as a reference timing, in which the absolute timing for sending or receiving of the first SL PRS is an absolute timing for sending or receiving of any SL PRS in the absolute timing for sending or receiving of the at least one SL PRS; calculate a relative timing of an absolute timing for sending or receiving of a second SL PRS to the absolute timing for sending or receiving of the first SL PRS, in which the absolute timing for sending or receiving of the second SL PRS is an absolute timing for sending or receiving of any SL PRS other than the absolute timing for sending or receiving of the first SL PRS in the absolute timing for sending or receiving of the at least one SL PRS; and send the relative timing to the first UE.

Optionally, in an embodiment of the disclosure, the timing information includes at least one of: a timing offset of an SL link of at least one positioning assistance UE; a timing offset of a DL radio frame of a serving cell of the first UE; or a clock offset of the first UE.

Optionally, in an embodiment of the disclosure, when the timing information is sent to the first UE, the sending module 2701 is specifically configured to send timing synchronization source information to the first UE.

Optionally, in an embodiment of the disclosure, a timing synchronization source corresponding to the timing synchronization source information includes at least one of: a GNSS; a UE directly synchronized to a GNSS clock; the UE, a gNB or an eNB directly synchronized to the GNSS clock; a UE directly synchronized to a gNB clock or an eNB clock; a UE indirectly synchronized to the gNB clock or the eNB clock; or a UE with a lowest priority.

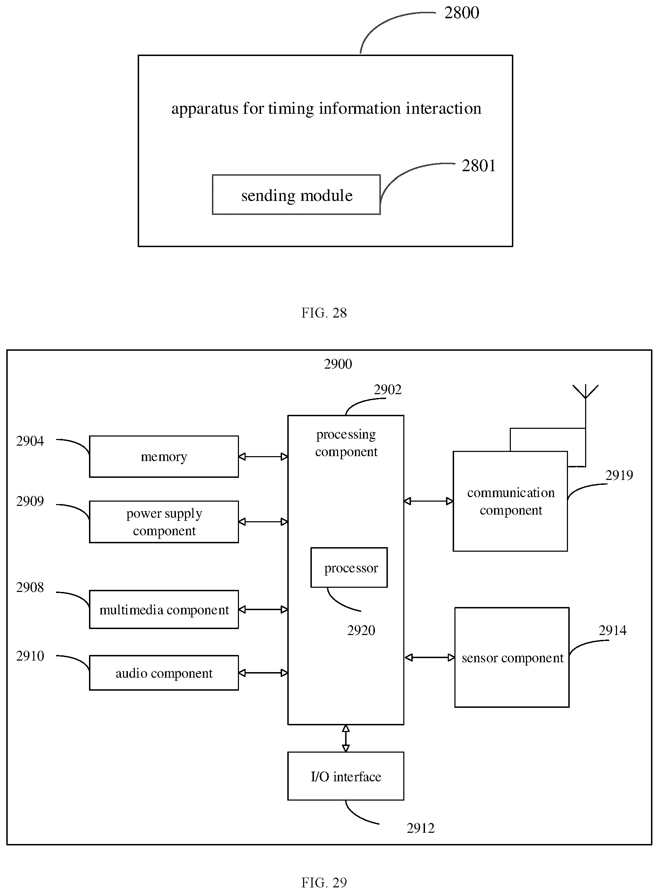

FIG. 28 is a structural block diagram illustrating an apparatus for timing information interaction according to an embodiment of the disclosure. As shown in FIG. 28, the apparatus 2800 may be configured in a base station. The apparatus 2800 may include a sending module 2801.

The sending module 2801 is configured to send timing information to a first UE, in which the timing information is configured to calibrate timing information of an SL PRS.

In summary, in the apparatus for timing information interaction according to the embodiments of the disclosure, the timing information is sent to the first UE device via the sending module, in which the timing information is configured to calibrate the timing information of the SL PRS. In embodiments of the disclosure, the timing information may be sent to the first UE, and the first UE may calibrate the timing information between the plurality of SL PRSs, which may improve the accuracy of determining the timing difference between the plurality of SL PRSs, reduce the inaccuracy of determining the positioning information, and improve the accuracy of determining the positioning information. The disclosure provides a processing apparatus for a "timing information interaction" scenario, in which the timing information is sent to the first UE, and the timing information of the SL PRS is calibrated by the first UE, which may improve the accuracy of determining the timing difference between the plurality of SL PRSs, and improve the accuracy of determining the positioning information.

Optionally, in an embodiment of the disclosure, the sending module 2801 is further configured to determine, based on an absolute timing for sending or receiving of at least one SL PRS sent by the at least one positioning assistance UE, an absolute timing for sending or receiving of a first SL PRS as a reference timing, in which the absolute timing for sending or receiving of the first SL PRS is an absolute timing for sending or receiving of any SL PRS in the absolute timing for sending or receiving of the at least one SL PRS; calculate a relative timing of an absolute timing for sending or receiving of a second SL PRS to the absolute timing for sending or receiving of the first SL PRS, in which the absolute timing for sending or receiving of the second SL PRS is an absolute timing for sending or receiving of any SL PRS other than the absolute timing for sending or receiving of the first SL PRS in the absolute timing for sending or receiving of the at least one SL PRS; and send the relative timing to the first UE.

Optionally, in an embodiment of the disclosure, the sending module 2801 is further configured to send the absolute timing for sending or receiving of the at least one SL PRS to the second UE.

Optionally, in an embodiment of the disclosure, when the timing information is sent to the first UE, the sending module 2801 is specifically configured to obtain a timing offset of an SL link of the at least one positioning assistance UE sent by the at least one positioning assistance UE; obtain a timing offset of a DL radio frame of a serving cell of the first UE; or obtain a clock offset of the first UE.

Optionally, in an embodiment of the disclosure, the sending module 2801 is further configured to send at least one of the following timing offsets to a second UE: the timing offset of the SL link of the at least one positioning assistance UE; the timing offset of the DL radio frame of the serving cell of the first UE; or the clock offset of the first UE.

Optionally, in an embodiment of the disclosure, the sending module 2801 is further configured to send timing synchronization source information to the first UE.

Optionally, in an embodiment of the disclosure, a timing synchronization source corresponding to the timing synchronization source information includes at least one of: clock information of a GNSS; clock information of a reference UE; or clock information of the base station.

FIG. 29 is a block diagram illustrating a UE according to an embodiment of the disclosure. For example, the UE 2900 may be a cell phone, a computer, a digital broadcast terminal, a message transceiver device, a game console, a tablet device, a medical device, a fitness device, a personal digital assistant, etc.

Referring to FIG. 29, the UE 2900 may include one or more of the following components: a processing component 2902, a memory 2904, a power supply component 2909, a multimedia component 2908, an audio component 2910, an input/output (I/O) interface 2912, a sensor component 2914, and a communication component 2919.

The processing component 2902 generally controls overall operations of the UE 2900, such as operations associated with display, telephone calls, data communications, camera operations, and recording operations. The processing component 2902 may include at least one processor 2920 to execute instructions to complete all or part of the steps of the above method. In addition, the processing component 2902 may include one or more modules to facilitate interactions between the processing component 2902 and other components. For example, the processing component 2902 may include a multimedia module to facilitate interactions between the multimedia component 2908 and the processing component 2902.

The memory 2904 is configured to store various types of data to support operations at the UE 2900. Examples of such data include instructions for any application or method operating on the UE 2900, contact data, phonebook data, messages, pictures, videos, etc. The memory 2904 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 2909 provides powers to various components of the UE 2900. The power supply component 2909 may include a power management system, at least one power supply, and other components associated with generating, managing, and distributing powers for the UE 2900.

The multimedia component 2908 includes a screen that provides an output interface between the UE 2900 and the user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touches, slides, and gestures on the touch panel. The touch sensor may not only sense a boundary of a touch or sliding action, but also detect a duration and pressure associated with the touch or sliding operation. In some embodiments, the multimedia component 2908 includes a front-facing camera and/or a rear-facing camera. When the UE 2900 is in an operation mode, such as a shooting mode or a video mode, the front camera and/or the rear camera may receive external multimedia data. Each of the front-facing camera and the rear-facing camera may be a fixed optical lens system or may have a focal length and optical zoom capabilities.

The audio component 2910 is configured to output and/or input audio signals. For example, the audio component 2910 includes a microphone (MIC), which is configured to receive external audio signals when the UE 2900 is in an operating mode, such as a call mode, a recording mode, and a voice recognition mode. The received audio signal may be further stored in the memory 2904 or transmitted via the communication component 2919. In some embodiments, the audio component 2910 also includes a speaker for outputting audio signals.

The I/O interface 2912 provides an interface between the processing component 2902 and a peripheral interface module, which may be a keyboard, a click wheel, a button, etc. The button may include, but is not limited to: a home button, volume buttons, a start button, and a lock button.

The sensor component 2914 includes one or more sensors for providing status assessment of various aspects for the UE 2900. For example, the sensor component 2914 may detect an open/closed state of the UE 2900, a relative positioning of components, such as a display and a keypad of UE 2900. The sensor component 2914 may also detect position changes of the UE 2900 or a component of the UE 2900, a presence or absence of user contacts with the UE 2900, an orientation or an acceleration/deceleration of the UE 2900 and temperature changes of the UE 2900. The sensor component 2914 may include a proximity sensor configured to detect a presence of a nearby object without any physical contact. The sensor component 2914 may also include a light sensor, such as a CMOS or CCD image sensor, for use in imaging applications. In some embodiments, the sensor component 2914 may also include an acceleration sensor, a gyroscope sensor, a magnetic sensor, a pressure sensor, or a temperature sensor.

The communication component 2919 is configured to facilitate wired or wireless communication between the UE 2900 and other devices. The UE 2900 may access a wireless network based on a communication standard, such as WiFi, 4G or 5G, or their combination. In an exemplary embodiment, the communication component 2919 receives a broadcast signal or broadcast-related information from an external broadcast management system via a broadcast channel. In an exemplary embodiment, the communication component 2919 also includes a near field communication (NFC) module to facilitate short-range communications. For example, the NFC module may be implemented based on radio frequency identification (RFID) technology, infrared data association (IrDA) technology, ultra wideband (UWB) technology, Bluetooth (BT) technology, and other technologies.

In an exemplary embodiment, the UE 2900 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above-mentioned methods.

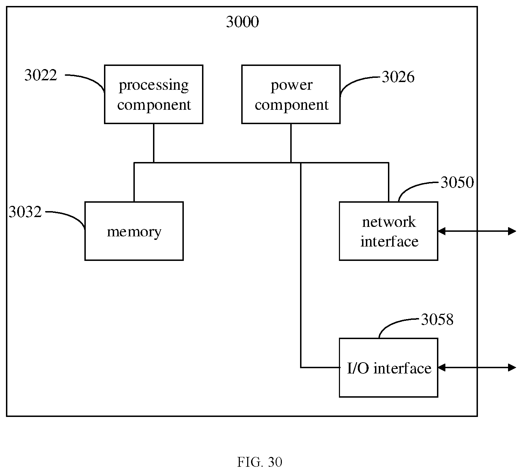

FIG. 30 is a block diagram illustrating a base station 3000 according to an embodiment of the disclosure. For example, the base station 3000 may be provided as a network device. Referring to FIG. 30, the base station 3000 includes a processing component 3022, which further includes at least one processor, and a memory resource represented by a memory 3032 for storing instructions that may be executed by the processing component 3022, such as an application program. The application program stored in memory 3032 may include one or more modules each corresponding to a set of instructions. Alternatively, the processing component 3022 is configured to execute the instructions to perform any of the methods applied to the network device, for example, the method shown in FIG. 16.

The base station 3000 may also include a power component 3026 configured to perform power management of the base station 3000, a wired or wireless network interface 3050 configured to connect the base station 3000 to a network, and an input/output (I/O) interface 3058. At the base station 3000, an operating system stored in the memory 3032 may be operated, such as Windows Server TM, Mac OS XTM, UnixTM, LinuxTM, FreeBSDTM, or the like.

In the above embodiments according to the disclosure, description is made to the method according to embodiments of the disclosure from the perspectives of the network device and the UE respectively. In order to realize each of the functions in the method according to the above embodiments of the disclosure, the network device and the UE may include a hardware structure, and a software module. Each of the above functions is implemented in the form of the hardware structure, the software module, or a combination of the hardware structure and the software module. A certain function of the above functions may be implemented in the form of the hardware structure, the software module, or the combination of the hardware structure and the software module.

In the above embodiments according to the disclosure, description is made to the method according to embodiments of the disclosure from the perspectives of the network device and the UE respectively. In order to realize each of the functions in the method according to the above embodiments of the disclosure, the network device and the UE may include a hardware structure, and a software module. Each of the above functions is implemented in the form of the hardware structure, the software module, or a combination of the hardware structure and the software module. A certain function of the above functions may be implemented in the form of the hardware structure, the software module, or the combination of the hardware structure and the software module.

Embodiments of the disclosure provide a communication apparatus. The communication apparatus may include a transceiving module and a processing module. The transceiving module may include a sending unit and/or a receiving unit. The sending unit is configured to implement a sending function, and the receiving unit is configured to implement a receiving function. The transceiving module may implement the sending function and/or the receiving function.

The apparatus may be a UE (such as the UE provided in the above-described methods), an apparatus in the UE, or an apparatus that may be used in matching to the UE. Alternatively, the apparatus may be a network device, an apparatus in the network device, or an apparatus that may be used in matching to the network device.

Embodiments of the disclosure provide a communication device. The communication device may be a network device, a UE (such as the UE provided in above-described methods), or a chip, a chip system or a processor that supports the network device to realize the above-described methods, or a chip, a chip system or a processor that supports the UE to realize the above-described methods. The device may be configured to realize the methods described in the above method embodiments, and for details, please refer to the descriptions of the above-described method embodiments.

The communication device may include one or more processors. The processor may be a general purpose processor or a dedicated processor, such as, a baseband processor or a central processor. The baseband processor may be configured to process a communication protocol and communication data. The central processor may be configured to control the communication device (e.g., a network device, a baseband chip, a UE, a UE chip, a central unit (CU) or a distributed unit (DU)), to executing a computer program, and process data of the computer program.

Alternatively, the communication device may include one or more memories on which a computer program may be stored. The processor executes the computer program to cause the communication device to perform the methods described in the above method embodiments. Alternatively, data may also be stored in the memory. The communication device and the memory may be provided separately or may be integrated together.

Alternatively, the communication device may also include a transceiver and an antenna. The transceiver may be referred to as a transceiver unit, a transceiver machine, or a transceiver circuit, for realizing a transceiving function. The transceiver may include a receiver and a transmitter. The receiver may be referred to as a receiver machine or a receiving circuit, for realizing a receiving function. The transmitter may be referred to as a sender machine or a sending circuit, for realizing the sending function.

Alternatively, the communication device may also include one or more interface circuits. The interface circuits are configured to receive code instructions and transmit the code instructions to the processor. The processor runs the code instructions to cause the communication device to perform the method described in the method embodiments.

The communication device is a first UE (such as the UE provided in above-described methods). The processor is configured to perform the methods shown in any of FIG. 2 to FIG. 9.

When the communication device is a second UE, the processor is configured to perform the methods shown in any of FIG. 10 to FIG. 15.

When the communication device is a base station, the processor is configured to perform the methods shown in any of FIG. 16 to FIG. 23.

In an implementation, the processor may include a transceiver for implementing the receiving and sending function. For example, the transceiver may be a transceiver circuit, an interface, or an interface circuit. The transceiver circuit, interface, or interface circuitry for implementing the receiving and sending function may be separated, or may be integrated together. The transceiver circuit, interface, or interface circuit described above may be configured for code/data reading and writing, or may be configured for signal sending or delivery.

In an implementation, the processor may store the computer program. The processor executes the computer program to cause the communication device to perform the methods described in the above method embodiments. The computer program may be solidified in the processor, in which case the processor may be implemented by hardware.

In an implementation, the communication device may include circuits. The circuits may implement the sending, receiving or communicating function in the above method embodiments. The processor and the transceiver described in the disclosure may be implemented on an integrated circuit (IC), an analog IC, a radio frequency integrated circuit (RFIC), a mixed signal IC, an application specific integrated circuit (ASIC), a printed circuit board (PCB), and an electronic device. The processor and transceiver may also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be the network device or the UE (such as the UE in the above method embodiments), but a scope of the communication device described in the disclosure is not limited thereto, and a structure of the communication device may not be limited. The communication device may be a stand-alone device or may be part of a larger device. For example, the communication device may be:
(1) a stand-alone IC, a chip, a chip system or a subsystem;
(2) a collection of ICs including one or more ICs, where alternatively, the collection of ICs may also include storage components for storing data and a computer program;
(3) an ASIC, such as a modem;
(4) a module that may be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For the case where the communication device may be the chip or the chip system, the chip includes a processor and an interface. There may be one or more processors, and there may be a plurality of interfaces.

Alternatively, the chip further includes a memory configured to store necessary computer programs and data.

It is understood by those skilled in the art that various illustrative logical blocks and steps listed in embodiments of the disclosure may be implemented by electronic hardware, computer software, or a combination of both. Whether such function is implemented by hardware or software depends on a particular application and a design requirement of an entire system. Those skilled in the art may use various methods to implement the described function for each particular application, but such implementation should not be construed as going beyond the scope of protection of embodiments of the disclosure.

The disclosure also provides a readable storage medium for storing instructions. When the instructions are executed by a computer, the functions of any of the method embodiments described above is implemented.

The disclosure also provides a computer program product. When the computer program product is executed by a computer, the functions of any of the method embodiments described above is implemented.

The above embodiments may be implemented in whole or in part by software, hardware, firmware, or any combination of both. When implemented using software, the above embodiments may be implemented, in whole or in part, in the form of the computer program product. The computer program product includes one or more computer programs. When the computer program is loaded and executed on the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or in a wireless manner (e.g., by using infrared wave, wireless wave, or microwave). The computer-readable storage medium may be any usable medium to which the computer has access to or a data storage device such as a server and a data center integrated by one or more usable mediums. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In embodiments of the disclosure, for technical features, the terms "first", "second", and "third"; and "A", "B", "C" and "D" and the like are used to distinguish different technical features, the technical features described using the terms "first", "second", and "third"; and "A", "B", "C" and "D"; and the like do not indicate any order of precedence or magnitude.

Other implementations of the embodiments of the disclosure will be readily apparent to those skilled in the art from consideration of the specification and practice of the disclosure disclosed herein. This application is intended to cover any modification, use or adaptation of the embodiments of the disclosure, these modifications, uses or adaptations follow the general principles of the embodiments of the disclosure and include those in the technical field not disclosed by the embodiments of the disclosure Common knowledge or common technical means. The specification and examples are to be considered exemplary only, with a true scope and spirit of the embodiments of the disclosure being indicated by the following claims.

It should be understood that the embodiments of the disclosure are not limited to the precise structures described above and shown in the drawings, and various modifications and changes may be made without departing from the scope thereof. The scope of embodiments of the disclosure is limited only by the appended claims.

## Claims

1. A method for timing information interaction, performed by a first user equipment (UE), comprising:
receiving timing information sent by a second UE, wherein the timing information is configured to calibrate timing information of a sidelink (SL) positioning reference signal (PRS).

2. The method according to claim 1, wherein the timing information comprises at least one of:
an absolute timing for SL PRS sending;
a relative timing for SL PRS sending;
a timing offset of an SL link of the first UE;
an absolute timing for SL PRS receiving;
a relative timing for SL PRS receiving;
a clock offset of the first UE; or
a timing offset for timing of a downlink (DL) radio frame of a serving cell of the first UE.

3. The method according to claim 2, wherein the absolute timing comprises at least one of:
an universal time coordinated (UTC) timing; or
a global navigation satellite system (GNSS) timing.

4. The method according to claim 1, wherein a timing offset of an SL link comprises a timing offset of an SL link radio frame of the first UE relative to a reference timing, and the timing offset relative to the reference timing comprises at least one of:
a timing relative to the DL radio frame of the serving cell of the first UE;
a timing relative to a radio frame of an SL link of a reference UE;
a timing relative to a DL radio frame of a network device for the serving cell of the first UE; or
a timing relative to a DL radio frame of a UE or a network device of a reference cell.

5. The method according to claim 1, wherein a clock offset of the first UE is an offset value of an internal clock in the first UE relative to a standard clock.

6. The method according to claim 2, further comprising:
receiving a sending timing of the SL PRS sent by at least one positioning reference UE, wherein the sending timing comprises an absolute sending timing or a relative sending timing;
determining, based on a receiving timing of the SL PRS and the sending timing, at least one one-way propagation delay; and
determining, based on a difference and a timing offset between the at least one one-way propagation delay, a value of timing difference of arrival (TDOA), wherein the timing offset comprises the timing offset of the SL link of the first UE and/or the clock offset of the first UE.

7. The method according to claim 1, further comprising:
receiving the timing information sent by the second UE via at least one of following messages:
a sidelink control information (SCI) message;
a medium access control (MAC) control element (CE) message;
a radio resource control (RRC) message; or
a non-access stratum (NAS) message.

8. The method according to claim 7, wherein the NAS message comprises at least one of:
a long term evolution positioning protocol (LPP) message of general mobile communication technology;
an SL LPP message of SL mobile communication technology; or
a PCS-S message.

9. The method according to claim 1, further comprising:
receiving timing synchronization source information sent by the second UE.

10. The method according to claim 9, wherein a timing synchronization source corresponding to the timing synchronization source information comprises at least one of:
a global navigation satellite system (GNSS);
a UE directly synchronized to a GNSS clock;
the UE, a next generation node base (gNB) or an evolved node base (eNB) directly synchronized to the GNSS clock;
a UE directly synchronized to a gNB clock or an eNB clock;
a UE indirectly synchronized to the gNB clock or the eNB clock; or
a UE with a lowest priority.

11. A method for timing information interaction, performed by a first user equipment (UE), comprising:
receiving timing information sent by a base station, wherein the timing information is configured to calibrate timing information of a sidelink (SL) positioning reference signal (PRS).

12. The method according to claim 11, further comprising:
receiving timing synchronization source information sent by the base station.

13. The method according to claim 11, wherein a timing synchronization source corresponding to the timing synchronization source information comprises at least one of:
a global navigation satellite system (GNSS) clock;
a reference UE clock; or
a base station clock.

14. A method for timing information interaction, performed by a second user equipment (UE), comprising:
sending timing information to a first UE, wherein the timing information is configured to calibrate timing information of a sidelink (SL) positioning reference signal (PRS).

15. The method according to claim 14, further comprising:
receiving the timing information sent by a base station.

16. The method according to claim 14, wherein sending the timing information to the first UE comprises:
determining, based on an absolute timing for sending or receiving of at least one SL PRS sent by a base station or at least one positioning assistance UE, an absolute timing for sending or receiving of a first SL PRS as a reference timing, wherein the absolute timing for sending or receiving of the first SL PRS is an absolute timing for sending or receiving of any SL PRS in the absolute timing for sending or receiving of the at least one SL PRS;
calculating a relative timing of an absolute timing for sending or receiving of a second SL PRS to the absolute timing for sending or receiving of the first SL PRS, wherein the absolute timing for sending or receiving of the second SL PRS is an absolute timing for sending or receiving of any SL PRS other than the absolute timing for sending or receiving of the first SL PRS in the absolute timing for sending or receiving of the at least one SL PRS; and
sending the relative timing to the first UE.

17. The method according to claim 15, wherein the timing information comprises at least one of:
a timing offset of an SL link of at least one positioning assistance UE;
a timing offset of a downlink (DL) radio frame of a serving cell of the first UE; or
a clock offset of the first UE.

18. The method according to claim 14, wherein sending the timing information to the first UE comprises:
sending timing synchronization source information to the first UE.

19. The method according to claim 16, wherein a timing synchronization source corresponding to the timing synchronization source information comprises at least one of:
a global navigation satellite system (GNSS);
a UE directly synchronized to a GNSS clock;
the UE, a next generation node base (gNB) or an evolved node base (eNB) directly synchronized to the GNSS clock;
a UE directly synchronized to a gNB clock or an eNB clock;
a UE indirectly synchronized to the gNB clock or the eNB clock; or
a UE with a lowest priority.

20. A method for timing information interaction, performed by a base station, comprising:
sending timing information to a first user equipment (UE), wherein the timing information is configured to calibrate timing information of a sidelink (SL) positioning reference signal (PRS).

21. The method according to claim 20, further comprising:
receiving the timing information sent by at least one positioning assistance UE.

22. The method according to claim 20, further comprising:
determining, based on an absolute timing for sending or receiving of at least one SL PRS sent by at least one positioning assistance UE, an absolute timing for sending or receiving of a first SL PRS as a reference timing, wherein the absolute timing for sending or receiving of the first SL PRS is an absolute timing for sending or receiving of any SL PRS in the absolute timing for sending or receiving of the at least one SL PRS;
calculating a relative timing of an absolute timing for sending or receiving of a second SL PRS to the absolute timing for sending or receiving of the first SL PRS, wherein the absolute timing for sending or receiving of the second SL PRS is an absolute timing for sending or receiving of any SL PRS other than the absolute timing for sending or receiving of the first SL PRS in the absolute timing for sending or receiving of the at least one SL PRS; and
sending the relative timing to the first UE.

23. The method according to claim 22, further comprising:
sending the absolute timing for sending or receiving of the at least one SL PRS to the second UE.

24. The method according to claim 21, wherein sending the timing information to the first UE further comprises at least one of:
obtaining a timing offset of an SL link of the at least one positioning assistance UE sent by the at least one positioning assistance UE;
obtaining a timing offset of a downlink (DL) radio frame of a serving cell of the first UE; or
obtaining a clock offset of the first UE.

25. The method according to claim 24, further comprising:
sending at least one of the following timing offsets to a second UE:
the timing offset of the SL link of the at least one positioning assistance UE;
the timing offset of the DL radio frame of the serving cell of the first UE; or
the clock offset of the first UE.

26. The method according to claim 21, further comprising:
sending timing synchronization source information to the first UE.

27. The method according to claim 26, wherein a timing synchronization source corresponding to the timing synchronization source information comprises at least one of:
clock information of a global navigation satellite system (GNSS);
clock information of a reference UE; or
clock information of the base station.

28. The method according to claim 21, further comprising:
receiving the timing information sent by a network device.

29. An apparatus for timing information interaction, configured in a first user equipment (UE), comprising:
a receiving module, configured to receive timing information sent by a second UE, wherein the timing information is configured to calibrate timing information of a sidelink (SL) positioning reference signal (PRS).

30. An apparatus for timing information interaction, configured in a first user equipment (UE), comprising:
a receiving module, configured to receive timing information sent by a base station, wherein the timing information is configured to calibrate timing information of a sidelink (SL) positioning reference signal (PRS).

31. An apparatus for timing information interaction, configured in a second user equipment (UE), comprising:
a sending module, configured to send timing information to a first UE, wherein the timing information is configured to calibrate timing information of a sidelink (SL) positioning reference signal (PRS).

32. An apparatus for timing information interaction, configured in a base station, comprising:
a sending module, configured to send timing information to a first user equipment (UE), wherein the timing information is configured to calibrate timing information of a sidelink (SL) positioning reference signal (PRS).

33. A first user equipment (UE), comprising a processor and a memory, wherein the memory stores a computer program, and when the computer program is executed by the processor, cause the first UE to implement the method according to any one of the claims 1 to 10.

34. A first user equipment (UE), comprising a processor and a memory, wherein the memory stores a computer program, and when the computer program is executed by the processor, cause the first UE to implement the method according to any one of the claims 11 to 13.

35. A second user equipment (UE), comprising a processor and a memory, wherein the memory stores a computer program, and when the computer program is executed by the processor, cause the second UE to implement the method according to any one of the claims 14 to 19.

36. A base station, comprising a processor and a memory, wherein the memory stores a computer program, and when the computer program is executed by the processor, cause the base station to implement the method according to any one of the claims 20 to 28.

37. A communication device, comprising: a processor and an interface circuit;
wherein the interface circuit is configured to receive code instructions and transmit the code instructions to the processor; and
the processor is configured to execute the code instructions to implement the method of any one of claims 1 to 10.

38. A communication device, comprising: a processor and an interface circuit;
wherein the interface circuit is configured to receive code instructions and transmit the code instructions to the processor; and
the processor is configured to execute the code instructions to implement the method of any one of claims 11 to 13.

39. A communication device, comprising: a processor and an interface circuit;
wherein the interface circuit is configured to receive code instructions and transmit the code instructions to the processor; and
the processor is configured to execute the code instructions to implement the method of any one of claims 14 to 19.

40. A communication device, comprising: a processor and an interface circuit;
wherein the interface circuit is configured to receive code instructions and transmit the code instructions to the processor; and
the processor is configured to execute the code instructions to implement the method of any one of claims 20 to 28.

41. A computer-readable storage medium for storing instructions, wherein when the instructions are executed, the method of any one of claims 1 to 10 is implemented.

42. A computer-readable storage medium for storing instructions, wherein when the instructions are executed, the method of any one of claims 11 to 13 is implemented.

43. A computer-readable storage medium for storing instructions, wherein when the instructions are executed, the method of any one of claims 14 to 19 is implemented.

44. A computer-readable storage medium for storing instructions, wherein when the instructions are executed, the method of any one of claims 20 to 28 is implemented.
